(19) Europäisches Patentamt
European Patent Office
Office européen des brevets

(11) EP 2 173 789 B1

(12) **FASCICULE DE BREVET EUROPEEN**

(45) Date de publication et mention de la délivrance du brevet:
**13.08.2014 Bulletin 2014/33**

(21) Numéro de dépôt: **08761237.0**

(22) Date de dépôt: **19.06.2008**

(51) Int Cl.:
***B60C 1/00*** (2006.01) ***C08G 81/02*** (2006.01)
***C08C 19/44*** (2006.01) ***C08K 3/00*** (2006.01)
***C08F 297/02*** (2006.01) ***C08F 297/04*** (2006.01)
***C08G 65/336*** (2006.01) ***C08G 65/337*** (2006.01)
***C08L 53/00*** (2006.01) ***C08L 53/02*** (2006.01)
***C08L 71/02*** (2006.01)

(86) Numéro de dépôt international:
**PCT/EP2008/057812**

(87) Numéro de publication internationale:
**WO 2009/000750 (31.12.2008 Gazette 2009/01)**

(54) **PROCÉDÉ DE PRÉPARATION D'UN COPOLYMÈRE DIÉNIQUE À BLOC POLYÉTHER, COPOLYMÈRE DIÉNIQUE À BLOC POLYÉTHER, COMPOSITION DE CAOUTCHOUC RENFORCÉE ET PNEUMATIQUE**

VERFAHREN ZUR HERSTELLUNG EINES DIENCOPOLYMERS MIT EINEM POLYETHERBLOCK, DIENCOPOLYMER MIT EINEM POLYETHERBLOCK, VERSTÄRKTE KAUTSCHUKZUSAMMENSETZUNG UND REIFEN

PROCESS FOR PREPARING A DIENE COPOLYMER COMPRISING A POLYETHER BLOCK, DIENE COPOLYMER COMPRISING A POLYETHER BLOCK, REINFORCED RUBBER COMPOSITION AND TYRE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.06.2007 FR 0704733**

(43) Date de publication de la demande:
**14.04.2010 Bulletin 2010/15**

(73) Titulaires:
- **COMPAGNIE GENERALE DES ETABLISSEMENTS MICHELIN**
  **63000 Clermont-Ferrand (FR)**
- **MICHELIN Recherche et Technique S.A.**
  **1763 Granges-Paccot (CH)**

(72) Inventeurs:
- **ROBERT, Pierre**
  **Greer, South Carolina 29650 (US)**
- **SEEBOTH, Nicolas**
  **F-63000 Clermont-Ferrand (FR)**
- **FAVROT, Jean-Michel**
  **F-63800 Cournon d'Auvergne (FR)**
- **CHABOCHE, Philippe**
  **F-63000 Clermont-Ferrand (FR)**

(74) Mandataire: **Le Cam, Véronique Marie Christine et al**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**EP-A- 1 550 704** **EP-A1- 1 127 909**
**EP-A1- 1 471 113**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 173 789 B1

## Description

La présente invention concerne un copolymère diénique à blocs comprenant au moins un bloc polyéther, ainsi que son procédé de préparation. Ce copolymère confère à une composition de caoutchouc renforcée le contenant des propriétés hystérétiques améliorées à l'état vulcanisé, ainsi que des propriétés de mise en oeuvre intéressantes à l'état cru. L'invention concerne également un pneumatique incorporant une telle composition.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

La réduction de l'hystérèse des mélanges est un objectif permanent qui doit toutefois se faire en conservant l'aptitude à la mise en oeuvre des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

Dans le cadre de mélange contenant une charge inorganique renforçante, il a été proposé d'utiliser des polymères diéniques fonctionnalisés à la place des polymères non fonctionnalisés qui étaient antérieurement utilisés, et en particulier des polymères fonctionnalisés par des dérivés alkoxysilanes.

A titre d'illustration de cet art antérieur relatif à des charges inorganiques renforçantes, on peut par exemple citer le brevet américain US-A-5 066 721, qui décrit une composition de caoutchouc comprenant un polymère diénique fonctionnalisé par un alkoxysilane ayant au moins un reste alkoxyle non hydrolysable en mélange avec de la silice.

Un inconvénient de ces réactions de fonctionnalisation par un dérivé alkoxysilane réside dans la mise en oeuvre ultérieure de l'opération de stripping à la vapeur d'eau, qui est nécessaire pour éliminer le solvant de polymérisation.

En effet, d'une manière générale, l'expérience montre que les polymères fonctionnalisés obtenus subissent des évolutions de macrostructure lors de cette opération de stripping, ce qui conduit à une sévère dégradation de leurs propriétés, à moins de se limiter à utiliser à titre d'agent de fonctionnalisation un alkoxysilane appartenant à une famille restreinte, telle que celle qui est décrite dans le document précité US-A-5 066 721.

C'est la raison pour laquelle des recherches ont été menées sur d'autres réactions de fonctionnalisation, toujours en vue de l'obtention de telles compositions de caoutchouc.

A titre d'exemple, on peut citer le brevet EP 0 778 311 B1 au nom de la demanderesse, qui divulgue l'incorporation à des compositions de caoutchouc comprenant à titre de charge renforçante de la silice à titre majoritaire, de polymères diéniques portant en extrémité de chaîne une fonction silanol ou un bloc polysiloxane ayant une extrémité silanol. On utilise par exemple un agent de fonctionnalisation constitué d'un polysiloxane cyclique, tel que l'hexaméthylcyclotrisiloxane. Les polymères fonctionnalisés obtenus peuvent être séparés du milieu réactionnel conduisant à leur formation par extraction à la vapeur d'eau du solvant, sans que leur macrostructure et, par conséquent, leurs propriétés physiques n'évoluent.

On a pu établir que ces polymères confèrent des propriétés de caoutchouterie, notamment hystérétiques et de renforcement à l'état réticulé, qui sont améliorées par rapport à celles de compositions témoins à base de polymères diéniques non fonctionnalisés, et qui sont au moins analogues à celles de compositions à base de polymères diéniques comprenant une fonction alkoxysilane.

Cependant, ces polymères, qui comportent un groupe fonctionnel silanol actif pour un couplage à de la silice ou à du noir de carbone modifié en surface par de la silice, bien que conférant aux compositions de caoutchouc les incorporant une amélioration des propriétés d'hystérèse et de renforcement, induisent généralement une aptitude à la mise en oeuvre des mélanges non réticulés qui est pénalisée par rapport à celle de polymères " témoins " non fonctionnalisés.

On a donc recherché d'autres moyens de diminution de l'hystérèse qui permettent une meilleure mise en oeuvre des mélanges.

Le brevet EP 1 127 909 B1 au nom de la demanderesse divulgue un procédé de préparation et l'utilisation en composition de caoutchouc vulcanisable d'un copolymère à bloc polyéther en bout de chaîne. Ce copolymère est destiné à interagir avec la charge inorganique renforçante de manière à diminuer l'hystérèse du mélange. Le procédé de préparation de ce copolymère comprend une méthode de greffage du bloc polyéther complexe en trois étapes : la fonctionnalisation des extrémités de chaînes polymériques vivantes par un organosiloxane cyclique, la réaction du polymère vivant ainsi fonctionnalisé sur un dialkyldihalogénosilane puis la réaction de ce polymère fonctionnalisé Si-X (X étant un halogène) avec un polyéthylène glycol en présence de diméthylaminopyridine. Il apparaît que les propriétés d'hystérèse de la composition de caoutchouc comprenant le copolymère sont significativement améliorées par rapport à une

composition comprenant un élastomère non fonctionnel, tout en permettant une mise en oeuvre améliorée par rapport à une composition comprenant un élastomère fonctionnalisé en bout de chaîne par une fonction silanol.

Le brevet US 6,518,369 propose une composition de caoutchouc renforcée contenant un copolymère diénique à bloc polyéther, ainsi qu'un procédé de préparation dudit copolymère. La solution retenue consiste à faire réagir des chaînes vivantes d'élastomères diéniques sur un polyéther spécifique. Bien que proposant une amélioration du taux de greffage du polyéther sur les chaînes de polymère préparé en solution, ce taux reste faible et insatisfaisant avec le procédé décrit dans ce brevet. Or, le rendement de greffage du bloc polyéther est déterminant pour la qualité de l'interaction du copolymère à blocs avec la charge renforçante dans une composition de caoutchouc renforcée, et donc pour les propriétés mécaniques de cette composition.

Le but de la présente invention est donc de remédier à cet état de fait. Notamment, un objectif est de proposer un polymère diénique modifié de préparation simple et qui interagit de manière satisfaisante avec la charge renforçante d'une composition de caoutchouc le contenant afin d'améliorer les propriétés mécaniques de ladite composition.

Ce but est atteint en ce que la demanderesse vient de découvrir un copolymère diénique à blocs, dont l'un au moins de ses blocs est un polyéther, utilisable en composition de caoutchouc vulcanisable, notamment pour la fabrication d'enveloppes de pneumatiques, ainsi qu'un procédé simplifié pour la préparation de ce copolymère diénique à blocs qui permet d'atteindre de manière inattendue un taux de greffage élevé du bloc polyéther sur les chaînes de polymère. Ce copolymère selon l'invention permet de réduire d'une manière significative pour la composition de caoutchouc le contenant, à l'état réticulé, le niveau d'hystérèse et, à l'état non réticulé, d'optimiser l'aptitude à la mise en oeuvre.

En particulier, en prenant comme référence les hystérèses de compositions de caoutchouc " témoins " contenant des élastomères diéniques non fonctionnalisés ou encore fonctionnalisés en bout de chaîne par un silanol, une composition de caoutchouc contenant un copolymère à blocs selon l'invention est caractérisée par une hystérèse qui est plus réduite que celle qui est relative à ces compositions " témoins ", ainsi que par une mise en oeuvre améliorée par rapport aux compositions de caoutchouc " témoins " à base de polymère diénique fonctionnalisé en bout de chaîne.

L'invention a donc pour objet un procédé de préparation d'un copolymère diénique à blocs dont un au moins desdits blocs est constitué d'un polyéther et au moins un autre desdits blocs est constitué d'un élastomère diénique.

L'invention a également pour objet un copolymère diénique à blocs dont un au moins desdits blocs est constitué d'un polyéther et au moins un autre desdits blocs est constitué d'un élastomère diénique, susceptible d'être obtenu par le procédé de l'invention.

Un autre objet de l'invention est une composition de caoutchouc renforcée comprenant ce copolymère diénique à blocs.

L'invention a aussi pour objet un pneumatique incorporant une telle composition.

Le procédé selon l'invention, permettant de préparer un copolymère diénique à blocs dont l'un au moins desdits blocs est constitué d'un polyéther et au moins un autre desdits blocs est constitué d'un élastomère diénique, consiste à faire réagir un premier réactif, constitué d'un élastomère diénique vivant avec un deuxième réactif, constitué d'un agent de fonctionnalisation ayant un bloc polyéther fonctionnel de masse moléculaire moyenne en nombre de 150 à 5000 g/mol, de préférence de 150 à 3000 g/mol et plus préférentiellement de 200 à 3000 g/mol, représenté par la formule générale I:

$$R^1\text{-}(A)_m$$

dans laquelle,

$R^1$ représente un dérivé hydrocarboné alkyle en $C_1$ - $C_{15}$, aryle en $C_6$ - $C_{15}$ ou aralkyl en $C_7$-$C_{15}$, de valence m, de préférence $R^1$ représente un radical alkyle ou alkylène en $C_1$ - $C_4$ et encore plus préférentiellement $R^1$ est $-CH_3$, $-CH_2-CH_2-$, $-CH_2CH(CH_3)-$

m est un nombre entier de 1 à 4, de préférence m vaut 1 ou 2 de manière à ce qu'un bloc polyéther du copolymère diénique à blocs préparé se situe en milieu de chaîne polymérique, et

A représente, de manière identique ou différente lorsque m est différent de 1, le groupe de formule générale II

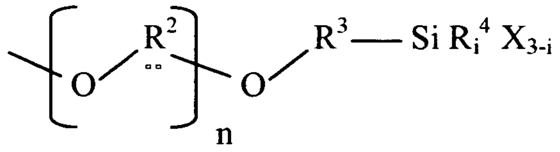

Formule II

dans laquelle,

$R^2$ représente un radical alkylène en $C_1$-$C_{10}$, particulièrement le radical

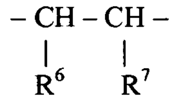

dans lequel $R^6$ et $R^7$ sont, indépendamment l'un de l'autre, un atome d'hydrogène ou un radical alkyle en $C_1$-$C_4$, de préférence $R^2$ est un radical éthylène ou propylène, plus préférentiellement éthylène,

$R^3$ représente un dérivé hydrocarboné alkyl en $C_1$ - $C_{50}$, aryle en $C_6$ - $C_{50}$ ou aralkyle en $C_7$ - $C_{50}$ divalent, de préférence un radical alkylène en $C_1$ - $C_{10}$, plus préférentiellement propane-1,3-diyl,

$R^4$ représente un radical alkyle $C_1$ - $C_{50}$, aryle en $C_6$ - $C_{50}$ ou aralkyle en $C_7$ - $C_{50}$, de préférence un radical alkyle en $C_1$ - $C_{10}$, plus préférentiellement méthyle,

chaque X représente, de manière identique ou différente, l'un au moins des groupes choisis parmi un atome d'halogène, de préférence un atome de chlore, et un groupe de formule - $OR^5$ dans laquelle $R^5$ représente un radical alkyle en $C_1$ - $C_{18}$, cycloalkoxyle en $C_5$-$C_{18}$ ou aryle en $C_6$ - $C_{18}$, de préférence un radical alkyle en $C_1$-$C_4$, plus préférentiellement méthyle ou éthyle,

n est un nombre supérieur à 1, de préférence inférieur à 120 et plus préférentiellement un nombre de 2 à 60, de manière à ce que le bloc polyéther ait une masse moléculaire moyenne en nombre de 150 à 5000 g/mol,

i est un nombre entier de 0 à 2, de préférence 0 ou 1.

L'homme du métier comprendra aisément à la lecture des formules I et II ci-dessus qu'il existe, selon la valence de $R^1$, au moins un et au plus quatre groupe(s) A, identiques ou différents, dans le(s)quel(s) il existe au moins un et au plus trois groupe(s) X, identiques ou différents, lié(s) au bloc polyéther par l'atome de silicium.

Parmi les agents de fonctionnalisation répondant à la formule générale I, on peut citer par exemple, le poly(oxy-1,2-ethanediyl),α-methyl-ω-[3-(trichlorosilyl)propoxy (de numéro CAS [36493-41-1] qui est commercialisé par la société ABCR sous la référence SIM6492.66), le poly(oxy-1,2-ethanediyl),α-methyl-ω-[3-(trimethoxysilyl)propoxy (de numéro CAS [65994-07-2] qui est commercialisé par la société ABCR sous la référence SIM6492.7), le poly(oxy-1,2-ethanediyl), α-[3-(ethoxydimethylsilyl)propyl]-ω-[3-(ethoxy-dimethylsilyl)propoxy] (de numéro CAS [164149-58-0]), le poly(oxy-1,2-ethanediyl), α-[3-(dimethoxymethylsilyl)propyl]-ω[3-(dimethoxymethylsilyl)propoxy] (de numéro CAS [124417-81-8]), le poly(oxy-1,2-ethanediyl), α-[3-(dichloromethylsilyl)propyl]-ω-[3-(dichloromethylsilyl)propoxy] (de numéro CAS [123863-84-3]), le poly(oxy-1,2-ethanediyl), α-[3-(methoxydimethylsilyl)propyl]-ω[3-(methoxydimethylsilyl)propoxy] (de numéro CAS [123863-83-2]), le poly(oxy-1,2-ethanediyl), α-[3-(diethoxymethylsilyl)propyl]-ω-[3-(diethoxymethylsilyl)propoxy] (de numéro CAS [123293-22-1]), le poly[oxy(methyl-1,2-ethanediyl)], α-[3-(dichloromethylsilyl)propyl]-ω-[3-(dichloromethylsilyl)propoxy] (de numéro CAS [64596-52-7])

Cet agent de fonctionnalisation peut être soit acheté directement, comme dans le cas du poly(oxy-1,2-ethanediyl),α-methyl-ω-[3-(trichlorosilyl)propoxy (de numéro CAS [36493-41-1] qui est commercialisé par la société ABCR sous la référence SIM6492.66), ou du poly(oxy-1,2-ethanediyl),α-methyl-ω-[3-(trimethoxsilyl)propoxy(de numéro CAS [65994-07-2] qui est commercialisé par la société ABCR sous la référence SIM6492.7), soit préparé selon des méthodes décrites dans la littérature consistant par exemple à réaliser une première réaction d'allylation d'un polyéthylène glycol

en présence de bromure d'allyle et d'une base telle que l'hydroxyde de potassium, soit en solution aqueuse, soit dans un milieu biphasique soit encore dans un solvant organique comme le tétrahydrofurane puis une réaction d'hydrosilylation par exemple en utilisant un catalyseur au platine tel que le complexe platine(0)-1,3-divinyl-1,1,3,3-tetramethyldisiloxane ou l'acide hexachloroplatinique, en présence d'un silane tel que le chlorodiméthylsilane, le dichloromethylsilane (cette préparation est décrite dans la demande de brevet EP 0 455 137 A2 et permet l'obtention du composé CAS [138748-63-7]) ou encore le trichlorosilane (les préparations aboutissant aux composés CAS [36493-41-1] et CAS [65994-07-2] sont décrites dans les demandes de brevet FR 2 366 340 et FR 2 366 341) ou encore un alkylalkoxysilane, en présence ou en l'absence de solvant.

Le bloc élastomère diénique peut être statistique, séquencé ou microséquencé. Ce bloc peut avoir toute microstructure appropriée, qui est fonction des conditions particulières de mise en oeuvre de la réaction de polymérisation, telles que la présence ou non d'un agent polaire et/ou randomisant et les quantités d'agent polaire et/ou randomisant employées.

Par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène, le vinylnaphtalène, etc.

A titre préférentiel pour ce bloc diénique, conviennent les polybutadiènes, les copolymères butadiène-styrène et les copolymères butadiène-styrène-isoprène préparés en solution et le polyisoprène. Avantageusement, le bloc diénique est un copolymère butadiène-styrène préparé en solution.

A ce titre conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

L'élastomère vivant constituant le premier réactif peut être obtenu de manière connue en soi, par voie anionique au moyen d'un initiateur organométallique mono-ou polyfonctionnel. Toutefois un initiateur contenant un métal alcalin tel que le lithium est utilisé à titre préférentiel. Comme initiateurs organolithiens conviennent notamment ceux comportant une ou plusieurs liaisons carbone-lithium. Des composés représentatifs sont les organolithiens aliphatiques tels que l'éthyllithium, le n-butyllithium (n-BuLi), l'isobutyllithium, les polyméthylènes dilithium tels que le 1,4-dilithiobutane, etc... Les initiateurs organolithiens monofonctionnels sont particulièrement préférés, notamment en vue de l'obtention de copolymères à au moins trois blocs, le bloc polyéther se situant en milieu de chaîne polymérique. Les amidures de lithium sont également des initiateurs préférés. L'amidure de lithium est obtenu à partir d'une amine secondaire acyclique ou cyclique, dans ce dernier cas la pyrrolidine et l'hexaméthylèneimine sont hautement préférées ; ledit amidure pouvant être rendu soluble dans un solvant hydrocarboné grâce à l'utilisation conjointe d'un agent de solvatation, un éther par exemple, comme décrit dans le brevet FR 2 250 774.

La polymérisation est de préférence effectuée de manière connue en soi, en présence d'un solvant inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

Plusieurs types d'agents polaires peuvent être utilisés parmi lesquels des agents polaires non chélatants de type THF et des agents polaires chélatants possédant sur au moins deux atomes au moins un doublet non liant, comme par exemple de type tétrahydrofurfuryl éthyle éther ou tétraméthyl éthylènediamine.

La polymérisation peut être effectuée en continu ou en discontinu. On effectue généralement la polymérisation à une température comprise entre 20°C et 120°C et de préférence voisine de 30°C à 90°C.

La réaction de fonctionnalisation de l'élastomère diénique vivant, obtenu à l'issue de cette étape de polymérisation, peut se dérouler à une température comprise entre -20°C et 100 °C, par addition de l'agent de fonctionnalisation de formule générale I sur les chaînes polymèriques vivantes ou inversement. Cette réaction peut bien sûr être réalisée avec un ou plusieurs agent(s) de fonctionnalisation répondant à la formule générale I.

Le mélangeage du polymère vivant avec l'agent de fonctionnalisation de formule générale I peut être réalisé par tout moyen approprié notamment à l'aide de tout mélangeur disposant d'une agitation de type statique et/ou tout mélangeur dynamique de type parfaitement agité connu par l'homme de l'art. Ce dernier détermine le temps de réaction entre le polymère diénique vivant et l'agent de fonctionnalisation. A titre d'exemple, ce temps peut être compris entre 10 secondes et 2 heures.

Selon une variante de l'invention, lorsque l'atome de silicium de l'agent de fonctionnalisation porte plus d'un site réactif halogéné Si-X, la réaction de fonctionnalisation peut se poursuivre par une étape d'hydrolyse ou d'alcoolyse connue en soi permettant de générer des fonctions silanol Si-OH ou alkoxysilane Si-OR à partir de ces sites actifs halogénés n'ayant pas réagi avec l'élastomère vivant. Cette étape d'hydrolyse ou d'alcoolyse peut être réalisée en ajoutant la solution de polymère à une solution aqueuse ou à une solution contenant un alcool ou à l'inverse, en ajoutant l'eau ou l'alcool à la solution de polymère. Cette étape pourra être réalisée ou non en présence d'une base ou d'un tampon. A titre d'exemple on pourra utiliser une amine telle que la triéthylamine.

Selon une autre variante de l'invention, le procédé peut également comprendre une étape de fonctionnalisation intermédiaire de l'élastomère diénique vivant par un organosiloxane cyclique, par exemple l'hexaméthylcyclotrisiloxane, qui est effectuée (comme décrit dans le brevet EP 0 778 311 B1) pour obtenir un polymère avec une extrémité silanolate de lithium, avant réaction avec l'agent de fonctionnalisation de formule générale I.

On notera que cette fonctionnalisation intermédiaire permet de limiter les réactions de polysubstitution dans le cas où l'agent de fonctionnalisation de formule générale I comporte plusieurs sites réactifs halogénés sur le même atome. Cette fonctionnalisation intermédiaire est donc avantageusement mise en oeuvre dans ce cas.

Le procédé de l'invention peut comprendre, selon une autre variante, une étape supplémentaire de fonctionnalisation, de couplage et/ou d'étoilage, connue de l'homme du métier, mettant en oeuvre un composé autre qu'un organosiloxane cyclique et différent de l'agent de fonctionnalisation de formule générale I, par exemple un agent de couplage et/ou d'étoilage comprenant un atome du groupe IV de la classification périodique des éléments, tel que notamment un dérivé à base d'étain.

On notera que cette modification supplémentaire de l'élastomère diénique peut être avantageusement mise en oeuvre pour réguler le fluage à froid du copolymère à blocs de l'invention.

Une autre variante de l'invention consiste à combiner au moins deux de ces variantes.

Un autre objet de l'invention est un copolymère diénique à blocs qui comporte au moins un bloc polyéther de masse moléculaire moyenne en nombre de 150 à 5000 g/mol, de préférence de 150 à 3000g/mol et plus préférentiellement de 200 à 3000 g/mol, représenté par la formule générale III

$$R^1{(A')}_m$$

dans laquelle,

$R^1$ représente un dérivé hydrocarboné alkyle en $C_1$ - $C_{15}$, aryle en $C_6$ - $C_{15}$ ou aralkyl en $C_7$-$C_{15}$, de valence m, de préférence $R^1$ représente un radical alkyle ou alkylène en $C_1$ - $C_4$ et encore plus préférentiellement $R^1$ est $-CH_3$, $-CH_2-CH_2-$, $-CH_2CH(CH_3)-$

m est un nombre entier de 1 à 4, de préférence m vaut 1 ou 2 de manière à ce qu'un bloc polyéther du copolymère diénique à blocs préparé se situe en milieu de chaîne, et

A' représente, de manière identique ou différente lorsque m est différent de 1, le groupe de formule générale IV

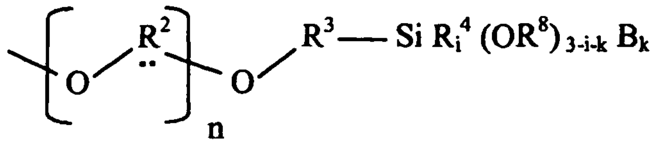

**Formule IV**

dans laquelle,

$R^2$ représente un radical alkylène en $C_1$-$C_{10}$, particulièrement le radical

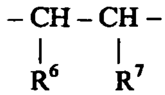

dans lequel $R^6$ et $R^7$ sont, indépendamment l'un de l'autre, un atome d'hydrogène ou un radical alkyle en $C_1$-$C_4$, de préférence $R^2$ représente un radical éthylène ou propylène, plus préférentiellement le radical éthylène,

$R^3$ représente un dérivé hydrocarboné alkyle en $C_1$ - $C_{50}$, aryle en $C_6$ - $C_{50}$ ou aralkyle en $C_7$ - $C_{50}$ divalent, de préférence un radical alkylène en $C_1$ - $C_{10}$, plus préférentiellement propane-1,3-diyl,

$R^4$ représente un radical alkyl en $C_1$ - $C_{50}$, aryle en $C_6$ - $C_{50}$ ou aralkyle en $C_7$ - $C_{50}$, de préférence un radical alkyle en $C_1$ - $C_{10}$,, plus préférentiellement méthyle,

$R^8$ représente un atome d'hydrogène ou un radical alkyle en $C_1$ - $C_{18}$, cycloalkyle en $C_5$-$C_{18}$ ou aryle en $C_6$ - $C_{18}$, de préférence alkyle en $C_1$-$C_4$, plus préférentiellement $R^8$ représente un atome d'hydrogène ou un radical méthyle ou éthyle

n est un nombre supérieur à 1, de préférence inférieur à 120 et plus préférentiellement un nombre de 2 à 60, de manière à ce que le bloc polyéther ait une masse moléculaire moyenne en nombre de 150 à 5000 g/mol,

i est un nombre entier de 0 à 2, de préférence 0 ou 1,

k est un nombre entier de 1 à 3, de sorte que $i + k \leq 3$, préférentiellement k vaut 1 ou 2 et

B représente le groupement - [(- O - Si $R^9$ $R^{10}$)$_q$- P], dans lequel $R^9$ et $R^{10}$ représentent, indépendamment l'un de l'autre, un radical alkyl $C_1$ - $C_{50}$ ou aryle en $C_6$ - $C_{50}$ ou aralkyle en $C_7$ - $C_{50}$, de préférence un radical alkyle en $C_1$ - $C_{10}$,, plus préférentiellement méthyle, q est un nombre entier de 0 à 10 , de préférence non nul, et plus préférentiellement q vaut 1, et P est un élastomère diénique tel que défini plus haut.

L'homme du métier comprendra aisément à la lecture des formules III et IV ci-dessus qu'il existe, selon la valence de $R^1$, au moins un et au plus quatre groupe(s) A', identiques ou différents.

Selon une variante de réalisation préférentielle de l'invention, le copolymère diénique à blocs est un copolymère comportant au moins trois blocs, l'un desdits blocs étant constitué d'un bloc polyéther situé en milieu de chaîne polymérique. Plus préférentiellement encore, le copolymère diénique à blocs comporte trois blocs.

Selon une mise en oeuvre particulière de cette variante préférentielle de l'invention, lorsque m vaut 1 alors k vaut 2. Selon cette variante le bloc polyéther est situé en milieu de chaîne polymérique et pendant à cette chaîne.

Selon une autre mise en oeuvre particulière de cette variante préférentielle de l'invention, lorsque m vaut 2 alors k vaut 1. Selon cette variante le bloc polyéther est situé en milieu de chaîne polymérique entre deux blocs diéniques dans la chaîne.

Selon une autre variante de l'invention, dans la formule générale IV, i+k vaut 1 ou 2. Le copolymère à blocs de l'invention comporte alors avantageusement au moins une fonction silanol ou alkoxysilane au sein du copolymère. Ce copolymère à blocs confère aux compositions de caoutchouc renforcées le contenant des propriétés de caoutchouterie, et en particulier des propriétés hystérétiques, davantage améliorées du fait d'une meilleure interaction entre la charge et le copolymère diénique. Ceci s'observe notamment lorsque la charge renforçante comprend de la silice.

Le copolymère diénique à bloc de l'invention peut également se présenter, selon une autre variante de l'invention, sous forme d'un coupage (ou mélange) avec au moins un élastomère diénique, de même nature que les blocs diéniques du copolymère, modifié par un agent de fonctionnalisation, de couplage et/ou d'étoilage différent de celui représenté par la formule générale I.

Une variante de l'invention consiste à combiner au moins deux de ces variantes de l'invention.

Le copolymère diénique à blocs selon l'invention est susceptible d'être obtenu en mettant en oeuvre le procédé de préparation décrit ci-dessus.

L'invention a également pour objet une composition de caoutchouc renforcée à base d'au moins un copolymère diénique à blocs qui est destiné à interagir avec la charge renforçante et qui comporte au moins un bloc polyéther de masse moléculaire moyenne en nombre de 150 à 5000 g/mol, de préférence de 150 à 3000g/mol et plus préférentiellement de 200 à 3000 g/mol tel que décrit précédemment.

Par l'expression "à base de", il faut entendre dans la présente demande, une composition comportant le mélange et/ou le produit de la réaction des différents constituants utilisés, certains des constituants étant susceptibles de, ou destinés à réagir entre eux, au moins en partie, lors des différentes phases de fabrication de la composition, en particulier au cours de la vulcanisation (cuisson).

Une composition de caoutchouc selon l'invention est obtenue par mélangeage au moyen d'un travail thermo-mécanique dudit copolymère diénique à blocs, d'une part, avec une charge renforçante et, d'autre part, avec des additifs appropriés pour l'obtention d'une composition de caoutchouc vulcanisable.

Selon des variantes de réalisation pour l'obtention de cette composition selon l'invention, on utilise ledit copolymère à blocs en coupage avec un autre copolymère à blocs selon la présente invention et/ou avec un ou plusieurs élastomères conventionnellement utilisés dans les enveloppes de pneumatiques et choisis parmi le caoutchouc naturel, les élastomères diéniques synthétiques, éventuellement couplés et/ou étoilés et/ou encore partiellement ou entièrement fonctionnalisés par un agent de fonctionnalisation différent de celui utilisé dans le procédé de préparation de l'invention décrit plus haut et représenté par la formule générale I, les élastomères synthétiques autres que diéniques, voire des polymères autres que des élastomères.

On notera que l'amélioration des propriétés de la composition de caoutchouc selon l'invention sera d'autant plus élevée, que la proportion dudit ou desdits élastomères conventionnels dans la composition selon l'invention sera plus réduite. Avantageusement, cet ou ces élastomères conventionnels pourront, le cas échéant, être présents dans la composition selon l'invention selon une quantité allant de 1 à 80 parties en poids pour 100 parties en poids de copolymère diénique à blocs selon l'invention comprenant au moins un bloc polyéther lié à au moins un bloc diénique par au moins un atome de silicium.

Comme charge renforçante on peut utiliser tout type de charge renforçante connue pour ses capacités à renforcer une composition de caoutchouc utilisable pour la fabrication de pneumatiques. La charge renforçante de la composition de caoutchouc selon l'invention contient néanmoins au moins une charge inorganique renforçante.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire", voire "charge non noir" (*"non-black filler"*) par opposition au noir de carbone (considéré comme une charge organique dans le cadre de la présente description), cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique. Une telle charge se caractérise généralement, de manière connue, par la présence de groupes hydroxyle (-OH) à sa surface, nécessitant en cela l'emploi d'un agent ou système de couplage destiné à assurer une liaison stable entre l'élastomère et la charge.

Avantageusement, ladite charge inorganique renforçante est, en totalité ou tout du moins majoritairement, de la silice ($SiO_2$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2$/g, même si les silices précipitées hautement dispersibles sont préférées.

Dans le présent exposé, la surface spécifique BET est déterminée de manière connue, selon la méthode de Brunauer-Emmet-Teller décrite dans " The Journal of the American Chemical Society " Vol. 60, page 309, février 1938 et correspondant à la norme AFNOR NFT 45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP, 1135 MP et 1115 MP de la société Rhodia, la silice Hi-Sil 2000 et Hi Sil EZ 150G de la société PPG, les silices Zeopol 8715, 8755 ou 8745 de la Société Huber telles que décrites dans la demande WO 03/016387, des silices précipitées traitées telles que par exemple les silices " dopées " à l'aluminium décrites dans le document de brevet EP A 735 088.

L'état physique sous lequel se présente la charge inorganique renforçante est indifférent, que ce soit sous

forme de poudre, microperles, granulés, ou de billes. Bien entendu, on entend également par charge inorganique renforçante des mélanges de différentes charges inorganiques renforçantes, en particulier de silices hautement dispersibles telles que décrites ci-dessus. A titre de charge inorganique renforçante, convient également l'alumine ($Al_2O_3$) hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm qui sont décrites dans le document de brevet européen EP A 810 258. Comme exemples non limitatifs de telles alumines renforçantes, on peut citer notamment les alumines "Baikalox A125" ou "CR125" (Société Baïkowski), "APA 100RDX" (Condéa), "Aluminoxid C" (Degussa) ou "AKP G015" (Sumitomo Chemicals). Conviennent également les hydroxydes d'aluminium, tels que ceux décrits dans le document de brevet WO A 99/28376.

On notera que la charge renforçante d'une composition de caoutchouc selon l'invention peut contenir en mélange, en plus de la ou des charges inorganiques renforçantes précitées, une charge organique, telle que du noir de carbone et/ou des charges inertes (non renforçantes).

Cependant, à titre préférentiel, la charge inorganique renforçante est présente dans la charge renforçante selon une fraction massique supérieure à 50% et pouvant aller jusqu'à 100%.

Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N339, N347, N375. Comme charges inertes non renforçantes conviennent des particules d'argile, bentonite, talc, craie, kaolin.

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par exemple, les coupages noir/silice ou les noirs partiellement ou intégralement recouverts de silice conviennent pour constituer la charge renforçante. Conviennent également des charges renforçantes comprenant les noirs de carbone recouverts au moins en partie d'une couche inorganique, par exemple de silice nécessitant quant à elle l'utilisation d'un agent de couplage pour établir la liaison avec l'élastomère, tels que, à titre non limitatif, les charges qui sont commercialisées par la société CABOT sous la dénomination "CRX 2000", et qui sont décrites dans le document de brevet WO A 96/37547.

Dans le cas où la charge renforçante ne contient qu'une charge inorganique renforçante et du noir de carbone, la fraction massique de ce noir de carbone dans ladite charge renforçante est préférentiellement choisie inférieure ou égale à 30 %.

Cependant, l'expérience montre que les propriétés précitées de la composition selon l'invention sont d'autant plus améliorées, que la charge renforçante qu'elle comprend contient une fraction massique plus élevée en charge inorganique renforçante, c'est à dire supérieure à 70 %. L'expérience montre également que lesdites propriétés sont optimales lorsque ladite composition contient uniquement une charge inorganique renforçante, par exemple de la silice, à titre de charge renforçante. Ce dernier cas constitue donc un exemple préférentiel de composition de caoutchouc selon l'invention.

Avantageusement, la charge inorganique renforçante est présente dans la composition de l'invention selon une quantité comprise entre 20 et 200 pce [pce : parties en poids pour cent parties d'élastomère(s)], et de préférence entre 35 et 150 pce, l'optimum étant différent selon les applications visées.

Par ailleurs, lorsque la charge renforçante de la composition de caoutchouc selon l'invention contient une fraction massique supérieure à 50%, de préférence supérieure à 70%, en charge inorganique renforçante, par exemple de la silice, plus particulièrement lorsque cette fraction massique est de 100%, les propriétés d'hystérèse de la composition vulcanisée sont d'autant plus améliorées que, dans le copolymère à blocs de l'invention, au moins un atome de silicium qui lie un bloc polyéther à au moins un bloc élastomère diénique porte une fonction hydroxyle ou alkoxy. Cette variante constitue une autre mise en oeuvre préférentielle de la composition de caoutchouc selon l'invention.

La composition de caoutchouc selon l'invention comprend en outre, de manière classique, un agent de liaison charge inorganique renforçante / matrice élastomère.

Par agent de liaison, on entend plus précisément un agent apte à établir une liaison suffisante de nature chimique et/ou physique entre la charge considérée et l'élastomère, tout en facilitant la dispersion de cette charge au sein de la matrice élastomère. Un tel agent de liaison, au moins bifonctionnel, a par exemple comme formule générale simplifiée " Y-T-X' ", dans laquelle :

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (-OH) de surface de la charge inorganique (par exemple les silanols de surface lorsqu'il s'agit de silice);

- X' représente un groupe fonctionnel (fonction " X' ") capable de se lier physiquement et/ou chimiquement à l'élastomère, par exemple par l'intermédiaire d'un atome de soufre;

- T représente un groupe divalent permettant de relier Y et X'.

Les agents de liaison ne doivent pas être confondus avec de simples agents de recouvrement de la charge considérée qui, de manière connue, peuvent comporter la fonction Y active vis-à-vis de la charge mais sont dépourvus de la fonction X' active vis-à-vis de l'élastomère. On peut utiliser tout agent de liaison connu pour, ou susceptible d'assurer efficacement dans les compositions de caoutchouc utilisables pour la fabrication de pneumatiques, la liaison (ou le couplage) entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X' et Y précitées. Des agents de liaison silice/élastomère, notamment, ont été décrits dans un grand nombre de documents, les plus connus étant des alkoxysilanes bifonctionnels tels que des alkoxysilanes polysulfurés.

On utilise notamment des silanes polysulfurés, dits "symétriques" ou "asymétriques" selon leur structure particulière, tels que décrits par exemple dans les les demandes WO 03/002648 (ou US 2005/0016651) et WO 03/002649 (ou US 2005/0016650), qui énoncent en détail de tels composés connus.

Conviennent en particulier, sans que la définition ci-après soit limitative, des alkoxysilanes polysulfurés symétriques répondant à la formule générale (V) suivante :

(V) $Z - A'' - S_{n'} - A'' - Z$, dans laquelle :

- n' est un entier de 2 à 8 (de préférence de 2 à 5);
- A" est un radical hydrocarboné divalent (de préférence des groupements alkylène en C1-C18 ou des groupements arylène en C6-C12, plus particulièrement des alkylènes en C1-C10, notamment en C1-C4 en particulier le propylène);
- Z répond à l'une des formules ci-après :

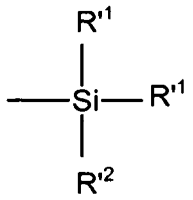
;
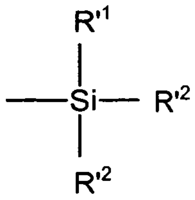
;
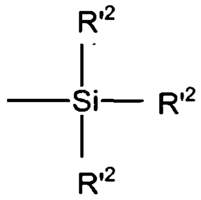
,

dans lesquelles :

- les radicaux $R'^1$, substitués ou non substitués, identiques ou différents entre eux, représentent un groupe alkyle en C1-C18, cycloalkyle en C5-C18 ou aryle en C6-C 18 (de préférence des groupes alkyle en C1-C6, cyclohexyle ou phényle, notamment des groupes alkyle en C1-C4, plus particulièrement le méthyle et/ou l'éthyle) ;
- les radicaux $R'^2$, substitués ou non substitués, identiques ou différents entre eux, représentent un groupe hydroxyle, alkoxyle en C1-C18 ou cycloalkoxyle en C5-C18 (de préférence des groupes alkoxyle en C1-C8 ou cycloalkoxyle en C5-C8, plus préférentiellement des groupes alkoxyle en C1-C4, en particulier le méthoxyle et/ou l'éthoxyle).

Dans le cas d'un mélange d'alkoxysilanes polysulfurés répondant à la formule (V) ci dessus, notamment des mélanges usuels disponibles commercialement, on comprendra que la valeur moyenne des " n' " est un nombre fractionnaire, de préférence allant de 2 à 5 et plus préférentiellement proche de 4.

Comme alkoxysilanes polysulfurés, on citera plus particulièrement les polysulfures (notamment les disulfures, trisulfures ou tétrasulfures) de bis-(alkoxyl(C1-C4)-alkyl(C1-C4)silylalkyl(C1-C4)), comme par exemple les polysulfures de bis(3 triméthoxysilylpropyl) ou de bis(3-triéthoxysilylpropyl). Parmi ces composés, on utilise notamment le tétrasulfure de bis(3-triéthoxysilylpropyl), en abrégé TESPT, de formule $[(C_2H_5O)_3Si(CH_2)_3S_2]_2$ ou le disulfure de bis(triéthoxysilylpropyle), en abrégé TESPD, de formule $[(C_2H_5O)_3Si(CH_2)_3S]_2$. On citera également les polysulfures (notamment disulfures, trisulfures ou tétrasulfures) de bis (monoalkoxyl(C1-C4) dialkyl(C1-C4)silylpropyl), plus particulièrement le tétrasulfure ou disulfure de bis monoéthoxydiméthylsilylpropyle (en abrégé MESPT), tel que décrit dans la demande de brevet WO 02/083782 (ou US 2004/0132880) au nom des demanderesses.

A titre d'exemples d'agents de liaison autres que les alkoxysilanes polysulfurés précités, on citera notamment des polyorganosiloxanes (POS) bifonctionnels ou encore des polysulfures d'hydroxysilane tels que décrits dans les demandes WO 02/30939 (ou US 6,774,255) et WO 02/31041 5 ou US 2004/051210), ou encore des silanes ou POS porteurs de groupements azo-dicarbonyle, tels que décrits par exemple dans les demandes de brevets WO 2006/125532, WO 2006/125533 et WO 2006/125534.

Dans les compositions conformes à l'invention, le taux d'agent de liaison est avantageusement inférieur à 20 pce, étant entendu qu'il est en général souhaitable d'en utiliser le moins possible. Son taux est préférentiellement compris entre 0,5 et 12 pce, plus préférentiellement de 3 à 10 pce, en particulier de 4 à 7 pce.

Les compositions conformes à l'invention comprennent également, outre ledit copolymère diénique à blocs selon l'invention, et ladite charge inorganique renforçante, des plastifiants, des pigments, des anti-oxydants, des agents anti-fatigue, des cires anti-ozonantes, des promoteurs d'adhésion, des résines renforçantes ou plastifiantes, par exemple telles que décrites dans le document WO02/10269, des peroxydes et ou bismaléimides, des accepteurs (par exemple résine phénolique novolaque) ou des donneurs de méthylène (par exemple HMT ou H3M), un système de réticulation à base soit de soufre et/ou de peroxyde et/ou de bismaléimides, des activateurs de réticulation comprenant du monoxyde de zinc et de l'acide stéarique, des dérivés guanidiques (en particulier diphénylguanidine), des huiles d'extension, un ou plusieurs agents de recouvrement de la silice tels que des alcoxysilanes, des polyols, ou des amines.

En particulier, ces compositions peuvent être telles que ledit copolymère diénique à blocs selon l'invention, est étendu à une huile aromatique ou non aromatique ou très faiblement aromatique, choisie dans le groupe constitué par une huile paraffinique, naphténique, huile MES, huile TDAE, les esters de glycérol, les résines plastifiantes hydrocarbonées présentant une haute Tg de préférence supérieure à 25 °C et les mélanges de tels plastifiants, avec une quantité d'huile d'extension comprise entre 0 et 50 pce.

La composition de caoutchouc vulcanisable conforme à l'invention peut être préparée selon un procédé comprenant les étapes suivantes:

(i) la réalisation, à une température maximale comprise entre 130 °C et 200 °C, d'un premier temps de travail thermomécanique (parfois qualifié de phase "non productive") des constituants de base nécessaires, à l'exception du système de réticulation, de ladite composition comprenant au moins un copolymère diénique à blocs selon l'invention et une charge renforçante, puis

(ii) la réalisation, à une température inférieure à ladite température maximale dudit premier temps, de préférence inférieure à 120 °C, d'un second temps de travail mécanique au cours duquel est incorporé ledit système de réticulation,

(iii) l'extrusion ou le calandrage de la composition de caoutchouc ainsi obtenue, sous la forme désirée, pour fabriquer des semi-finis tels que des bandes de roulement.

Ce procédé peut également comprendre, préalablement à la réalisation des étapes (i), (ii) et (iii) précitées, les étapes de la préparation du copolymère diénique à blocs selon le procédé de l'invention, à savoir, dans une première étape, la réaction du (des) monomère(s) en présence ou non d'un solvant hydrocarboné inerte en présence ou non d'un agent polaire avec un initiateur de polymérisation, pour former un élastomère diénique vivant et la réaction, dans une seconde étape, dudit élastomère vivant avec l'agent de fonctionnalisation de formule générale I, pour obtenir, le copolymère diénique à blocs. Il est bien entendu que la préparation du copolymère diénique à blocs peut être réalisée conformément aux différentes variantes du procédé de l'invention décrites plus haut.

L'invention a également pour objet un pneumatique qui incorpore dans au moins un de ses éléments constitutifs une composition de caoutchouc telle que celle mentionnée plus haut, et plus particulièrement des articles semi-finis d'un pneumatique qui comprennent cette composition.

En raison de l'hystérèse réduite qui caractérise une composition de caoutchouc selon l'invention à l'état vulcanisé, on notera qu'un pneumatique dont la bande de roulement comprend ladite composition présente une résistance au roulement avantageusement réduite. L'invention a donc également pour objet une bande de roulement de pneumatique qui est telle qu'elle comprend une composition de caoutchouc réticulable ou réticulée telle que celle mentionnée plus haut, ou bien qui est telle qu'elle est constituée de cette composition.

Les caractéristiques précitées de la présente invention, ainsi que d'autres, seront mieux comprises à la lecture de la description suivante de plusieurs exemples de réalisation de l'invention, donnés à titre illustratif et non limitatif.

## EXEMPLES DE REALISATION DE L'INVENTION

Mesures et tests utilisés

Techniques expérimentales utilisées pour la caractérisation avant cuisson des polymères obtenus :

**(a)** On utilise la technique SEC (Size Exclusion Chromatography) qui permet de séparer les macromolécules en solution suivant leur taille à travers des colonnes remplies d'un gel poreux. Les macromolécules sont séparées suivant leur volume hydrodynamique, les plus volumineuses étant éluées en premier.
Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.
Il n'y a pas de traitement particulier de l'échantillon de polymère avant analyse. Celui-ci est simplement solubilisé dans du tétrahydrofurane à une concentration d'environ 1 g/l. Puis la solution est filtrée sur filtre de porosité 0.45$\mu$m avant injection.
L'appareillage utilisé est un chromatographe « WATERS alliance ». Le solvant d'élution est le tétrahydrofurane et la température du système de 35°C. Deux jeux de colonnes et conditions chromatographiques correspondantes peuvent alors être utilisés :

1 - Un jeu de quatre colonnes WATERS en série, de dénominations commerciales « STYRAGEL HMW7 », « STYRAGEL HMW6E » et deux « STYRAGEL HT6E » avec un débit de 0.7 ml/min.
2 - Un jeu de deux colonnes WATERS de dénomination commerciale « STYRAGEL HT6E » avec un débit de 1 ml/min.

Le volume injecté de la solution de l'échantillon de polymère est 100 $\mu$l. Le détecteur est un réfractomètre différentiel « WATERS 2410 » et le logiciel d'exploitation des données chromatographiques est le système « WATERS EMPOWER».
Les masses molaires moyennes calculées sont relatives à une courbe d'étalonnage réalisée pour des SBR de microstructure suivante : 25 % massique de motifs type styrène, 23% massique de motifs type 1-2 et 50 % massique de motifs type 1-4 trans.

**(b)** Pour les polymères et les compositions de caoutchouc, les viscosités Mooney ML (1+4) à 100 °C sont mesurées selon la norme ASTM D 1646.
On utilise un consistomètre oscillant tel que décrit dans la norme ASTM D 1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en " unité Mooney " (UM, avec 1 UM = 0,83 N.m).

**(c)** Les températures de transition vitreuse Tg des polymères sont mesurées au moyen d'un calorimètre différentiel (" differential scanning calorimeter ").

**(d)** Les analyses RMN sont réalisées sur un spectromètre 500 MHz BRUKER équipé d'une sonde " large bande " BBIz 5 mm. Pour l'expérience RMN $^1$H quantitative, la séquence utilise une impulsion 30° et un délai de répétition de 2 secondes. Les échantillons sont solubilisés dans le sulfure de carbone ($CS_2$). 100 $\mu$L de cyclohexane deutéré ($C_6D_{12}$) sont ajoutés pour le signal de lock.
Le spectre RMN $^1$H permet de quantifier la fonction éther par intégration du signal caractéristique des protons du groupement $OCH_2$, situé autour de $\delta$ = 3,4 ppm et la fonction $(CH_3)_2Si$ par intégration du signal caractéristique des protons $SiCH_3$ autour de $\delta$ = 0 ppm.
Le spectre RMN 2D $^1$H-$^{29}$Si permet de vérifier la nature de la fonction grâce aux valeurs de déplacements chimiques des noyaux Silicium et des protons au voisinage $^2$J (via 2 liaisons).

**(e)** La spectroscopie proche infrarouge (NIR) est utilisée pour déterminer quantitativement le taux massique de styrène dans l'élastomère ainsi que sa microstructure (répartition relative des unités butadiene 1,2-vinyl, 1,4-trans et 1,4 cis). Le principe de la méthode repose sur la loi de Beer-Lambert généralisée à un système multicomposants.

La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

**(f)** Pour les polymères, la viscosité inhérente à 25 °C d'une solution de polymère à 0,1 g/dl dans le toluène, est mesurée à partir d'un polymère sec :

PRINCIPE :

La viscosité inhérente est déterminée par la mesure du temps d'écoulement t de la solution de polymère et du temps d'écoulement $t_0$ du toluène, dans un tube capillaire.

Dans un tube Ubbelhode préalablement étalonné (diamètre du capillaire 0.46 mm, capacité 18 à 22 ml), placé dans un bain thermostaté à 25 $\pm$ 0,1 °C, le temps d'écoulement du toluène et celui de la solution de polymère à 0,1 g/dl sont mesurés.

La viscosité inhérente est obtenue par la relation suivante :

$$\eta_{inh} = \frac{1}{C} \ln \left[ \frac{\left( t - \frac{H}{t} \right)}{\left( t_o - \frac{H}{t_o} \right)} \right]$$

avec :

**C** : concentration de la solution toluénique de polymère en g/dl ;

**t**: temps d'écoulement de la solution toluénique de polymère en secondes ;
$\mathbf{t_o}$: temps d'écoulement du toluène en secondes ;
$\eta_{inh}$: viscosité inhérente exprimée en dl/g.
**H**: constante d'étalonnage du tube

**<u>1 Préparation des agents de fonctionnalisation</u>**

<u>A) Agents de fonctionnalisation non symétriques</u>

**Exemple 1 :** Polyéthylène glycol allyl méthyl éther de numéro CAS [27252-80-8]

A 25.3 mL de polyéthylène glycol mono méthyle éther (commercialisé par la société Aldrich avec une Mn indiquée par le fournisseur Mn $\approx$ 516 $g.mol^{-1}$) dans 10 mL de tétrahydrofurane est ajouté l'hydroxyde de potassium (5.61 g, 0.1 mol) et le bromure d'allyle (8.7 mL, 0.1 mol). La suspension est agitée pendant 24 h à température ambiante. Les solvants sont alors évaporés sous pression réduite et le résidu filtré sur silice (126 g, éluant : pentane/acétone dans les rapports volumiques 95/5). Après évaporation, 22.2 g d'une huile limpide incolore sont recueillis (rendement : 80%).

**Exemple 2 :** Poly(oxy-1,2-éthanediyl),$\alpha$-méthyl-$\omega$-[3-(trichlorosilyl)propoxy de numéro CAS [36493-41-1]

Ce produit est commercialisé sous la référence SIM6492-66 par la société ABCR qui indique que le nombre de motifs $-CH_2CH_2O-$ est compris entre 6 et 9.

Il peut sinon être préparé par exemple selon le mode opératoire suivant :

Sous atmosphère inerte, à 4.8 g de polyéthylène glycol allyl methyl éther de l'exemple 1 en solution dans 10 mL de diéthyl éther anhydre sont ajoutés 2.4 mL d'une solution d'acide hexachloroplatinique à 15 $g.L^{-1}$ dans le tétrahydrofurane et 5,83 g de trichlorosilane. La solution est agitée pendant 17h à température ambiante et les solvants et réactif en excès sont évaporés sous pression réduite. 6.6 g d'une huile jaune sont recueillis (rendement : 95 %).

**Exemple 3 :** Poly(oxy-1,2-éthanediyl),α-méthyl-ω-[3-(dichlorométhylsilyl)propoxy de numéro CAS [138748-63-7]

Sous atmosphère inerte, à 4.8 g de polyéthylène glycol allyl methyl éther de l'exemple 1 en solution dans 10 mL de diéthyl éther anhydre sont ajoutés 2.4 mL d'une solution d'acide hexachloroplatinique à 15 $g.L^{-1}$ dans le tétrahydrofurane et 4,95 g de dichlorométhylsilane. La solution est agitée pendant 17h à température ambiante et les solvants et réactif en excès sont évaporés sous pression réduite. 6.4 g d'une huile jaune sont recueillis (rendement : 95 %).

**Exemple 4 :** Poly(oxy-1,2-éthanediyl),α-méthyl-ω-[3-(chlorodiméthylsilyl)propoxy de numéro CAS [275373-96-1]

Sous atmosphère inerte, à 4.8 g de polyéthylène glycol allyl methyl éther de l'exemple 1 en solution dans 10 mL de diéthyl éther anhydre sont ajoutés 2.4 mL d'une solution d'acide hexachloroplatinique à 15 $g.L^{-1}$ dans le tétrahydrofurane et 4,07 g de chlorodiméthylsilane. La solution est agitée pendant 17h à température ambiante et les solvants et réactif en excès sont évaporés sous pression réduite. 6.2 g d'une huile jaune sont recueillis (rendement : 95 %).

B) Agents de fonctionnalisation symétriques

**Exemple 5 :** Polyéthylène glycol diallyl éther de numéro CAS [59788-01-01]

A 20.7 g de polyéthylène glycol (commercialisé par la société Aldrich avec une Mn indiquée par ce fournisseur d'environ 400 $g.mol^{-1}$) dans 20 mL de tétrahydrofurane est ajouté l'hydroxyde de potassium (11.2 g, 0.2 mol) et le bromure d'allyle (17.3 mL, 0,2 mol). La suspension est agitée pendant 24 h à température ambiante. Les solvants sont alors évaporés sous pression réduite et le résidu filtré sur silice (126 g, éluant : pentane/acétone dans les rapports volumiques 95/5). Après évaporation, 20.7 g d'une huile incolore sont recueillis (rendement : 83 %).

**Exemple 6 :** Polypropylène glycol diallyl éther de numéro CAS [37273-13-1]

A 20.7g de polypropylène glycol (commercialisé par la société Aldrich avec une Mn indiquée par ce fournisseur d'environ 400 $g.mol^{-1}$) dans 20 mL de tétrahydrofurane est ajouté l'hydroxyde de potassium (11.2 g, 0.2 mol) et le bromure d'allyle (17.3 mL, 0,2 mol). La suspension est agitée pendant 24 h à température ambiante. Les solvants sont alors évaporés sous pression réduite et le résidu filtré sur silice (126 g, éluant : pentane/acétone dans les rapports volumiques 95/5). Après évaporation, 20.7 g d'une huile incolore sont recueillis (rendement : 83 %).

**Exemple 7 :** Poly(oxy -1,2-ethanediyl), α-[3-(dichloromethylsilyl)propyl]-ω-[3-(dichloromethylsilyl)propoxy]

Sous atmosphère inerte, à 4.8 g de polyéthylène glycol diallyl éther de l'exemple 5 en solution dans 10 mL de diéthyl éther anhydre sont ajoutés 2.7 mL d'une solution d'acide hexachloroplatinique à 15 $g.L^{-1}$ dans le tétrahydrofurane et 5.7 g de dichlorométhylsilane. La solution est agitée pendant 17h à température ambiante et les solvants et réactif en excès sont évaporés sous pression réduite. 6.7 g d'une huile jaune sont recueillis (rendement : 95 %).

**Exemple 8 :** Poly(oxy -1,2-ethanediyl), α-[3-(chlorodimethylsilyl)propyl]-ω-[3-(chlorodimethylsilyl)propoxy]

Sous atmosphère inerte, à 4.8 g de polyéthylène glycol diallyl éther de l'exemple 5 en solution dans 10 mL de diéthyl éther anhydre sont ajoutés 2.7 mL d'une solution d'acide hexachloroplatinique à 15 $g.L^{-1}$ dans le tétrahydrofurane et 4.71 g de chlorodiméthylsilane. La solution est agitée pendant 17h à température ambiante et les solvants et réactif en excès sont évaporés sous pression réduite. 6.35 g d'une huile jaune sont recueillis (rendement : 95 %).

**Exemple 9 :** Poly(oxy -1,2-ethanediyl), α-[3-(dimethoxymethylsilyl)propyl]-ω-[3-(dimethoxymethylsilyl)propoxy

A une solution de méthanol (20 mL) et de triéthylamine (4,6 mL) est ajouté, à 0°C, goutte à goutte, 34 mL d'une solution de polypropylène glycol fonctionnel de l'exemple 7 de concentration 0,19 $mol.L^{-1}$. Après évaporation des solvants, le résidu est remis en solution dans l'éther et le précipité de $Et_3N.HCl$ est filtré. Après évaporation des solvants sous pression réduite 3.6 g d'une huile limpide sont recueillis (rendement 80 %).

**Exemple 10 :** Poly[oxy(methyl-1,2-ethanediyl)], α-[3-(dichloromethylsilyl)propyl]-ω-[3-(dichloromethylsilyl)propoxy] de numéro CAS [64596-52-7]

Sous atmosphère inerte, à 4.8 g de polypropylène glycol diallyl éther de l'exemple 6 en solution dans 10 mL de diéthyl éther anhydre sont ajoutés 2.7 mL d'une solution d'acide hexachloroplatinique à 15 $g.L^{-1}$ dans le tétrahydrofurane et 5.7 g de chlorodiméthylsilane. La solution est agitée pendant 17h à température ambiante et les solvants et réactif en excès sont évaporés sous pression réduite. 6.7 g d'une huile jaune sont recueillis (rendement : 95 %).

**Exemple 11 :** Poly[oxy(methyl-1,2-ethanediyl)], α-[3-(dimethoxymethyl-silyl)propyl]- ω-[3-(dimethoxymethylsilyl)propoxy] de numéro CAS [75009-88-0]

A une solution de méthanol (50 mL) et de triéthylamine (4,2 mL) est ajouté, à 0°C, goutte à goutte, 110 mL d'une solution de polypropylène glycol fonctionnel de l'exemple 10 de concentration 4.8 $mmol.L^{-1}$. Après évaporation des solvants, le résidu est remis en solution dans l'éther et le précipité de $Et_3N.HCl$ est filtré. Après évaporation des solvants sous pression réduite 3.3 g d'une huile limpide sont recueillis (rendement 88 %)

**<u>II Préparation des polymères</u>**

**Exemple 1 :** Polymère A conforme à l'invention:

SBR à bloc polyéther en milieu de chaîne avec deux fonctions SiOH

Dans un réacteur de 10 litres, maintenu sous une pression d'azote d'environ 2 bars, contenant 4200 grammes de méthylcyclohexane, sont injectés 156 grammes de styrène et 444 grammes de butadiène ainsi que 0,45 mL de tetrahydrofurfuryl éthyl éther. Après neutralisation des impuretés dans la solution à polymériser par addition de n-butyllithium, sont ajoutés 5,1 mmol de n-BuLi. La polymérisation est conduite à 40°C.

Après 74 min, le taux de conversion des monomères atteint 95%. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1.01 dl/g. La masse moléculaire Mn de ce témoin, déterminée par la technique SEC, est de 82000 g/mol, l'Ip est de 1,10.

8,4 mL d'hexaméthylcyclotrisiloxane en solution à 0,2 $mol.L^{-1}$ dans le méthylcyclohexane sont alors ajoutés. Après 30 min à 60°C, sont injectés 11,8 mL d'une solution de Poly(oxy - 1,2-ethanediyl), α-[3-(dichloromethylsilyl)propyl]-ω-[3-(dichloromethylsilyl)propoxy] à 0,22 $mol.L^{-1}$ dans le diéthyl éther. Après 90 min de réaction à 60°C, la solution est coulée sur 1200 g d'eau contenant 5,1 mmol de triéthylamine. La viscosité inhérente " finale " mesurée est de 1,75 dl/g. Le saut de viscosité, défini comme le rapport de ladite viscosité " finale " sur ladite viscosité " initiale ", est ici de 1,73. La viscosité ML du polymère ainsi couplé est de 55.

Le polymère est alors soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote.

La masse moléculaire Mn de ce copolymère à blocs, déterminée par la technique SEC, est de 178 000 g/mol et l'Ip est de 1,39. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population de chaînes linéaires non couplées dans une proportion de 15% en masse.

Le taux de polyéther déterminé par RMN $^1$H pour le copolymère A est de 3.7 mmol/kg ce qui, compte tenu de la masse moléculaire Mn théorique du polymère diénique et de celle du bloc polyéthylène glycol correspond à un taux de fonctionnalisation par le bloc polyéther d'environ 87 %.

La microstructure de ce copolymère A est déterminée par la méthode NIR:

Le taux massique de motifs 1,4-trans est de 20,8 %, celui de motifs 1,4-cis est de 19,2 % et celui de motifs 1,2 est de 60 % (chacun de ces trois taux se rapporte aux unités butadiène). Le taux massique de styrène est de 27 %.

**Exemple 2 :** Polymère B conforme à invention:

SBR à bloc polyéther pendant en milieu de chaîne avec une fonction SiOH

Dans un réacteur de 10 litres, maintenu sous une pression d'azote d'environ 2 bars, contenant 5500 grammes

de méthylcyclohexane, sont injectés 143 grammes de styrène et 407 grammes de butadiène ainsi que 0,57 mL de tetrahydrofurfuryl éthyl éther. Après neutralisation des impuretés dans la solution à polymériser par addition de n-butyllithium, sont ajoutés 5.1 mmol de n-BuLi. La polymérisation est conduite à 40°C.

Après 71 min, le taux de conversion des monomères atteint 96%. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 0.96 dl/g. La masse moléculaire Mn de ce témoin, déterminée par la technique SEC, est de 77000 g/mol, l'Ip est de 1,06.

Sont injectés 19.6 mL d'une solution de poly(oxy-1,2-ethanediyl),$\alpha$-methyl-$\omega$-[3-(trichlorosilyl)propoxy (de numéro CAS [36493-41-1] commercialisé par la société ABCR sous la référence SIM6492-66) à 0,14 $mol.L^{-1}$ dans le diéthyl éther. Après 90 min de réaction à -15°C, la solution est coulée sur 1200 g d'eau contenant 5,1 mmol de triéthylamine. La viscosité inhérente " finale " mesurée est de 1,65 dl/g. Le saut de viscosité, défini comme le rapport de ladite viscosité " finale " sur ladite viscosité " initiale ", est ici de 1,72. La viscosité ML du polymère ainsi couplé est de 54.

Le polymère est alors soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote.

La masse moléculaire Mn de ce copolymère à blocs, déterminée par la technique SEC, est de 167 000 g/mol et l'Ip est de 1,19. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population de chaînes linéaires non couplées dans une proportion de 10% en masse.

Le taux de polyéther déterminé par RMN $^1H$ pour le copolymère B est de 4.1 mmol/kg ce qui, compte tenu de la masse moléculaire Mn théorique du polymère diénique et de celle du bloc polyéthylène glycol correspond à un taux de fonctionnalisation par le bloc polyéther d'environ 88%.

La microstructure de ce copolymère B est déterminée par la méthode NIR :

Le taux massique de motifs 1,4-trans est de 20,9 %, celui de motifs 1,4-cis est de 19,2 % et celui de motifs 1,2 est de 60 % (chacun de ces trois taux se rapporte aux unités butadiène). Le taux massique de styrène est de 25 %.

**Exemple 3 :** Polymère C conforme à l'invention:

SBR à bloc polyéther pendant en milieu de chaîne sans fonction SiOH

Dans un réacteur de 10 litres, maintenu sous une pression d'azote d'environ 2 bars, contenant 4200 grammes de méthylcyclohexane, sont injectés 156 grammes de styrène et 444 grammes de butadiène ainsi que 0,45 mL de tetrahydrofurfuryl éthyl éther. Après neutralisation des impuretés dans la solution à polymériser par addition de n-butyllithium, sont ajoutés 4.5 mmol de n-BuLi. La polymérisation est conduite à 40°C.

Après 69 min, le taux de conversion des monomères atteint 96%. Ce taux est déterminé par pesée d'un extrait séché à 110 °C, sous la pression réduite de 200 mmHg. Un échantillon témoin est alors prélevé depuis le réacteur puis stoppé avec un excès de méthanol par rapport au lithium. La viscosité inhérente (viscosité " initiale "), laquelle est mesurée à 25 °C à 0,1 g/dl dans le toluène, est de 1.00 dl/g. La masse moléculaire Mn de ce témoin, déterminée par la technique SEC, est de 84000 g/mol, l'Ip est de 1,10.

Sont injectés 11,1 mL d'une solution de Poly(oxy-1,2-éthanediyl),$\alpha$-méthyl-$\omega$-[3-(dichlorométhylsilyl)propoxy de numéro CAS [138748-63-7] à 0,20 $mol.L^{-1}$ dans le diéthyl éther. Après 60 min de réaction à 60°C, on stoppe la réaction avec un excès de méthanol par rapport au lithium. La viscosité inhérente " finale " mesurée est de 1,61 dl/g. Le saut de viscosité, défini comme le rapport de ladite viscosité " finale " sur ladite viscosité " initiale ", est ici de 1,61. La viscosité ML du polymère ainsi couplé est de 50.

Le polymère est alors soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote.

La masse moléculaire Mn de ce copolymère à blocs, déterminée par la technique SEC, est de 151 000 g/mol et l'Ip est de 1,23. La décomposition mathématique du chromatogramme SEC en somme de gaussiennes (en faisant l'hypothèse que les coefficients de réponse du détecteur réfractométrique (dn/dc) des différentes populations sont identiques) indique la présence d'une population de chaînes linéaires non couplées dans une proportion de 20% en masse.

Le taux de polyéther déterminé par RMN $^1H$ pour le copolymère C est de 4.21 mmol/kg ce qui, compte tenu de la masse moléculaire Mn théorique du polymère diénique et de celle du bloc polyéthylène glycol correspond à un taux de fonctionnalisation par le bloc polyéther d'environ 93 %.

La microstructure de ce copolymère C est déterminée par la méthode NIR :

Le taux massique de motifs 1,4-trans est de 20.2 %, celui de motifs 1,4-cis est de 18.3 % et celui de motifs 1,2 est de 62 % (chacun de ces trois taux se rapporte aux unités butadiène). Le taux massique de styrène est de 25 %.

**Exemple 4 :** Préparation d'un SBR D " témoin " :

SBR fonctionnalisé SiOH en bout de chaîne

Dans un réacteur de 100 litres, maintenu sous une pression d'azote d'environ 2 bars, contenant 48.9 kg de méthylcyclohexane, sont injectés 1.93 kg de styrène et 5.21 kg de butadiène ainsi que 675 mL d'une solution de tetrahydrofurfuryl éthyl éther à 0,065 mol.$L^{-1}$ dans le méthylcyclohexane. Après neutralisation des impuretés dans la solution à polymériser par addition de n-butyllithium, est ajouté 490 mL de n-BuLi à 0,065 mol.$L^{-1}$ dans le méthylcyclohexane. La polymérisation est conduite à 45°C.

Après 45 min, le taux de conversion des monomères atteint 92%. Ce taux est déterminé par pesée d'un extrait séché à 110 °C, sous la pression réduite de 200 mmHg.

635 mL de solution d'hexaméthylcyclotrisiloxane à 0.0253 mol.$L^{-1}$ dans le méthylcyclohexane sont alors ajouté. Après 30 min à 60°C, le polymère est soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote.

La viscosité ML du copolymère est de 58.

La masse moléculaire Mn de ce copolymère, déterminée par la technique SEC, est de 161 000 g/mol et l'Ip est de 1,09.

La microstructure de ce copolymère D est déterminée par la méthode NIR :

Le taux massique de motifs 1,4-trans est de 20 %, celui de motifs 1,4-cis est de 19 % et celui de motifs 1,2 est de 61 % (chacun de ces trois taux se rapporte aux unités butadiène). Le taux massique de styrène est de 25 %.

Le taux de fonctions $(CH_3)_2Si$ déterminé par RMN $^1H$ pour ce copolymère est de 3,73 mmol/kg.

**Exemple 5 :** Préparation d'un SBR E " témoin " :

SBR non fonctionnel

Dans un réacteur de 100 litres, maintenu sous une pression d'azote d'environ 2 bars, contenant 48.9 kg de méthylcyclohexane, sont injectés 1.93 kg de styrène et 5.21 kg de butadiène ainsi que 675 mL d'une solution de tetrahydrofurfuryl éthyl éther à 0,065 mol.$L^{-1}$ dans le méthylcyclohexane. Après neutralisation des impuretés dans la solution à polymériser par addition de n-butyllithium, est ajouté 505 mL de n-BuLi à 0,065 mol.$L^{-1}$ dans le méthylcyclohexane. La polymérisation est conduite à 45°C.

Après 45 min, le taux de conversion des monomères atteint 92%. Ce taux est déterminé par pesée d'un extrait séché à 110 °C, sous la pression réduite de 200 mmHg.

0,55 L d'une solution de méthanol à 0,15 mol.$L^{-1}$ dans le toluène est alors ajoutée. La viscosité inhérente, laquelle est mesurée à 25 °C à 0,1 g/dl dans le toluène, est de 1.57 dl/g. Le polymère est alors soumis à un traitement antioxydant par addition de 0,8 parties pour cent parties d'élastomères (pce) de 4,4'-méthylène-bis-2,6-tert-butylphénol et de 0,2 parties pour cent parties d'élastomères (pce) de N-(1,3-diméthylbutyl)-N'-phényl-p-phénylènediamine.

On sépare le copolymère ainsi traité de sa solution par une opération de stripping à la vapeur d'eau, puis on le sèche sur outil à cylindres à 100°C pendant 15 minutes et enfin en étuve à 60°C sous courant d'azote.

La viscosité ML du copolymère est de 54.

La masse moléculaire Mn de ce copolymère, déterminée par la technique SEC, est de 158 000 g/mol et l'Ip est de 1,09.

La microstructure de ce copolymère E est déterminée par la méthode NIR :

Le taux massique de motifs 1,4-trans est de 20 %, celui de motifs 1,4-cis est de 19 % et celui de motifs 1,2 est de 61 % (chacun de ces trois taux se rapporte aux unités butadiène). Le taux massique de styrène est de 26 %.

**III Exemples comparatifs de compositions de caoutchouc**

A) Mesures et tests utilisés

Techniques expérimentales utilisées pour la caractérisation avant et après cuisson des compositions de caoutchouc :

**(a)** la viscosité Mooney ML (1+4) à 100° C: mesurée selon la norme ASTM: D-1646, intitulée " Mooney " dans les tableaux,
**(b)** la dureté SHORE A: mesure effectuée selon la norme DIN 53505,
**(c)** les modules d'allongement à 300 % (MA 300), à 100 % (MA 100) et à 10 % (MA 10): mesures effectuées selon la norme ISO 37,
**(d)** l'indice de cassage Scott à 23°C: on détermine la contrainte à la rupture (FR) en MPa et l'allongement à la rupture (AR) en %. Toutes ces mesures de traction sont effectuées dans les conditions normales de température et d'hygrométrie selon la norme ISO 37.
**(e)** la perte à 60°C : une perte d'énergie à 60 °C par rebond à énergie imposée mesurée au sixième choc. La valeur, exprimée en %, est la différence entre l'énergie fournie et l'énergie restituée, rapportée à l'énergie fournie.
**(f)** Les propriétés dynamiques Delta G* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10 Hz, dans les conditions normales de température (23°C) selon la norme ASTM D 1349-99. On effectue un balayage en amplitude de déformation crête-crête de 0,1 à 50% (cycle aller), puis de 50% à 0,1% (cycle retour). Les résultats exploités sont le module complexe de cisaillement dynamique (G*) et le facteur de perte tan δ. Pour le cycle retour, on indique la valeur maximale de tan δ observée (tan(δ)max), ainsi que l'écart de module complexe (Delta G*) entre les valeurs à 0,1 et 50% de déformation (effet Payne).

B) Les exemples

**Exemple 1 :**

**Compositions comprenant soit un élastomère possédant un bloc polyéther et au moins une fonction silanol en milieu de chaîne selon l'invention, soit un élastomère** non **conforme à l'invention (Tg = -25°C)**

Dans cet exemple, les quatre élastomères SBR A, SBR B, SBR D et SBR E ont été utilisés pour la préparation de compositions de caoutchouc A, B, D et E de type bande de roulement, comprenant chacune de la silice à titre de charge renforçante.

Chacune de ces compositions A, B, D et E présente la formulation suivante (exprimée en pce : parties pour cent parties d'élastomère) :

| | |
|---|---|
| Elastomère | 100 |
| Silice (1) | 80 |
| N234 | 1 |
| Huile MES (5) | 15 |
| Résine (6) | 15 |
| Agent de liaison (2) | 6.4 |
| ZnO | 2.5 |
| Acide stéarique | 2 |
| Antioxydant (3) | 1.9 |
| Cire anti-ozone " C32ST " (7) | 1.5 |
| Diphénylguanidine | 1.5 |
| Soufre | 1.2 |
| Sulfénamide (4) | 2 |

Avec :

(1) = Silice " Zeosil 1165 MP " de la société Rhodia,

(2) = Agent de liaison " Si69 " de la société Degussa,

(3) = N-(1,3-diméthylbutyl)-N'-phényl-p-phénylènediamine,

(4) = N-cyclohexyl-2-benzothiazylsulfénamide,

(5) = Catenex® SNR de la société Shell,

(6) = Résine Dercolyte L120 de la société DRT ou Sylvagum TR7125C de la société Arizona,

(7) = Cire anti-ozone de la Société Repsol

Chacune des compositions suivantes est réalisée, dans un premier temps, par un travail thermo-mécanique, puis, dans un second temps de finition, par un travail mécanique.

On introduit successivement, dans un mélangeur interne de laboratoire de type "Banbury', dont la capacité est de 400 $cm^3$, qui est rempli à 70% et dont la température initiale est d'environ 90°C, l'élastomère, les deux tiers de la charge renforçante, l'agent de couplage et la diphénylguanidine, puis, environ une minute plus tard, le reste de la charge renforçante, l'huile MES, la résine, l'antioxydant, l'acide stéarique et la cire anti-ozone " C32ST ", puis, environ deux minutes plus tard le monoxyde de zinc.

On conduit l'étape de travail thermo-mécanique pendant 4 à 5 minutes, jusqu'à une température maximale de tombée de 160°C environ.

Le premier temps précité de travail thermo-mécanique est ainsi réalisé, étant précisé que la vitesse moyenne des palettes lors de ce premier temps est de 45 t/min.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont consignés dans le tableau 1 ci-après.

Tableau 1 :

| Composition | A | B | D | E |
|---|---|---|---|---|
| Elastomère | SBR A | SBR B | SBR D | SBR E |
| ML (1+4) à 100°C (élastomère) | 55 | 54 | 58 | 54 |
| Propriétés à l'état non réticulé | | | | |
| ML (1+4) à 100°C (" Mooney mélange ") | 62 | 68 | 108 | 78 |
| Propriétés à l'état réticulé | | | | |
| Shore A | 62.4 | 64.9 | 63.9 | 70.2 |
| MA10 | 4.31 | 4.93 | 4.64 | 7.05 |
| MA100 | 2.21 | 2.36 | 2.23 | 2.16 |
| MA300 | 2.64 | 2.63 | 2.78 | 2.21 |
| MA300/MA100 | 1.19 | 1.11 | 1.25 | 1.02 |
| Indice de cassage Scott à 23°C | | | | |
| Fr (MPa) | 16.9 | 16.0 | 19.7 | 18.0 |
| Ar (%) | 389 | 381 | 413 | 490 |
| Pertes 60°C (%) | 27.5 | 28.5 | 21.8 | 36.3 |
| Propriétés dynamiques en fonction de la déformation | | | | |
| Delta G* (MPa) à 23°C | 1.06 | 1.79 | 1.67 | 6.58 |
| Tan (δ) max à 23°C | 0.309 | 0.324 | 0.367 | 0.476 |

On notera que les compositions A et B selon l'invention présentent des valeurs de Mooney " mélange " qui sont inférieures à celle de la composition E à base d'un élastomère non fonctionnel. Les compositions A et B selon l'invention présentent des valeurs de Mooney " mélange " qui sont très nettement inférieures à celle de la composition D à base d'un élastomère qui comprend une fonction SiOH en bout de chaîne. Les élastomères A et B qui comprennent un bloc polyéther et au moins une fonction SiOH en milieu de chaîne selon l'invention permettent d'améliorer très nettement la mise en oeuvre à l'état non réticulé par rapport à l'élastomère fonctionnel SiOH en bout de chaîne d'une part et permettent d'améliorer légèrement la mise en oeuvre à l'état non réticulé par rapport à l'élastomère non fonctionnel d'autre part.

Concernant les propriétés à l'état réticulé, on notera que le rapport MA300/MA100 des compositions A et B selon l'invention est nettement supérieur à celui de la composition E à base d'un élastomère non fonctionnel. Les élastomères A et B qui comprennent un bloc polyéther et au moins une fonction SiOH en milieu de chaîne selon l'invention permettent d'améliorer le renforcement par rapport à l'élastomère non fonctionnel.

Concernant les propriétés dynamiques, on notera que les valeurs de Delta G* et de $\tan\delta_{max}$ de la composition A selon l'invention sont inférieures à celles de la composition D à base d'un élastomère qui comprend une fonction SiOH en bout de chaîne. L'élastomère A qui comprend un bloc polyéther et deux fonctions SiOH en milieu de chaîne selon l'invention permet d'améliorer les propriétés hystérétiques par rapport à l'élastomère D qui comprend une fonction SiOH en bout de chaîne.

Concernant les propriétés dynamiques, on notera que la valeur de $\tan\delta_{max}$ de la composition B selon l'invention est inférieure à celle de la composition D à base d'un élastomère qui comprend une fonction SiOH en bout de chaîne. L'élastomère B qui comprend un bloc polyéther et une fonction SiOH en milieu de chaîne selon l'invention permet d'améliorer les propriétés hystérétiques par rapport à l'élastomère D qui comprend une fonction SiOH en bout de chaîne.

Concernant les propriétés dynamiques, on notera que les valeurs de Delta G* et de $\tan\delta_{max}$ des compositions A et B selon l'invention sont très nettement inférieures à celles de la composition E à base d'un élastomère non fonctionnel. Les élastomères A et B qui comprennent un bloc polyéther et au moins une fonction SiOH en milieu de chaîne selon l'invention permettent d'améliorer très nettement les propriétés hystérétiques par rapport à l'élastomère non fonctionnel.

En d'autres termes, les compositions A et B selon l'invention à base d'élastomères qui comprennent un bloc polyéther et au moins une fonction SiOH en milieu de chaîne présentent des propriétés de caoutchouterie à l'état non réticulé et à l'état réticulé qui sont améliorées par rapport à celles de la composition D à base d'un élastomère qui comprend une fonction SiOH en bout de chaîne du fait d'une aptitude à la mise en oeuvre très nettement améliorée et d'une hystérèse légèrement réduite.

En d'autres termes, les compositions A et B selon l'invention à base d'élastomères qui comprennent un bloc polyéther et au moins une fonction SiOH en milieu de chaîne présentent des propriétés de caoutchouterie à l'état non réticulé et à l'état réticulé qui sont améliorées par rapport à celles de la composition E à base d'un élastomère non fonctionnel du fait d'une hystérèse nettement réduite et d'une aptitude à la mise en oeuvre légèrement améliorée.

## Revendications

1. Procédé de préparation d'un copolymère diénique à blocs dont l'un au moins desdits blocs est constitué d'un élastomère diénique et l'autre au moins desdits blocs est constitué d'un polyéther, **caractérisé en ce qu'**il comprend une étape de réaction d'un élastomère diénique vivant sur un agent de fonctionnalisation ayant un bloc polyéther fonctionnel de masse moléculaire moyenne en nombre de 150 à 5000 g/mol, représenté par la formule générale I:

   $R^1$-$(A)_m$ Formule I

   dans laquelle,

   $R^1$ représente un dérivé hydrocarboné alkyle en $C_1$ - $C_{15}$ ou aryle en $C_6$ - $C_{15}$, ou alkylaryl en $C_7$-$C_{15}$, de valence m,
   m est un nombre entier de 1 à 4,
   A représente, de manière identique ou différente lorsque m est supérieur à 1, le bloc de formule générale II

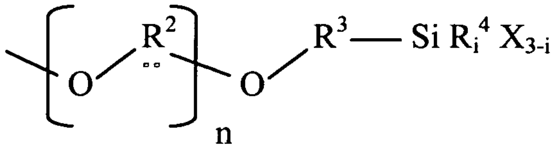

Formule II

dans laquelle,

$R^2$ représente un radical alkylène en $C_1$-$C_{10}$,
$R^3$ représente un dérivé hydrocarboné alkyl en $C_1$ - $C_{50}$, aryle en $C_6$ - $C_{50}$ ou aralkyle en $C_7$ - $C_{50}$ divalent,
$R^4$ représente un radical alkyle en $C_1$ - $C_{50}$ ou aryle en $C_6$ - $C_{50}$ ou aralkyle en $C_7$ -$C_{50}$,
X représente, de manière identique ou différente lorsque i vaut 0 ou 1, un groupe choisi parmi un atome d'halogène et un groupe de formule - $OR^5$ dans laquelle $R^5$ représente un radical alkyle en $C_1$ - $C_{18}$, cycloalkoxyle en $C_5$-$C_{18}$ ou aryle en $C_6$ - $C_{18}$,
n est un nombre supérieur à 1, de manière à ce que le bloc polyéther ait une masse moléculaire moyenne en nombre de 150 à 5000 g/mol,
i est un nombre entier de 0 à 2.

2. Procédé selon la revendication 1, **caractérisé en ce que** dans la formule générale I, $R^2$ représente le radical éthylène.

3. Procédé selon la revendication 1 ou 2, **caractérisé en ce que** dans la formule générale I, $R^3$ représente le radical propane-1,3-diyl.

4. Procédé selon l'une quelconque des revendications précédentes, **caractérisé en ce que** préalablement à l'étape de réaction de l'élastomère diénique vivant sur l'agent de fonctionnalisation de formule générale I, le procédé comprend une étape de préparation de l'élastomère diénique vivant par polymérisation anionique d'au moins un monomère diénique en présence d'un initiateur organométallique monofonctionnel.

5. Procédé selon l'une quelconque des revendications précédentes, **caractérisé en ce que** préalablement à l'étape de réaction de l'élastomère diénique vivant sur l'agent de fonctionnalisation de formule générale I, le procédé comprend une étape de fonctionnalisation intermédiaire du polymère vivant par réaction de ce dernier sur un composé organosiloxane cyclique pour former un élastomère diénique vivant à extrémité silanolate, et **en ce que** l'élastomère préfonctionnalisé réagit ensuite sur l'agent de fonctionnalisation de formule générale I.

6. Procédé selon l'une quelconque des revendications précédentes, **caractérisé en ce que** l'étape de réaction de l'élastomère diénique vivant sur l'agent de fonctionnalisation de formule générale I est suivie d'une étape d'hydrolyse ou d'alcoolyse.

7. Procédé selon l'une quelconque des revendications précédentes, **caractérisé en ce que** le procédé comprend une étape de couplage et/ou d'étoilage et/ou encore de fonctionnalisation supplémentaire avec un agent de fonctionnalisation autre qu'un composé organosiloxane cyclique et différent de celui de formule générale I.

8. Copolymère diénique à blocs, **caractérisé en ce qu'**il comporte au moins un bloc polyéther de masse moléculaire moyenne en nombre de 150 à 5000 g/mol et répond à la formule générale III

$R^1$-$(A')_m$ Formule III

dans laquelle,

$R^1$ représente un dérivé hydrocarboné alkyle en $C_1$ - $C_{15}$ ou aryle en $C_6$ - $C_{15}$, ou alkylaryl en $C_7$-$C_{15}$, de valence m,
m est un nombre entier de 1 à 4,
A' représente, de manière identique ou différente lorsque m est différent de 1, le bloc de formule générale IV

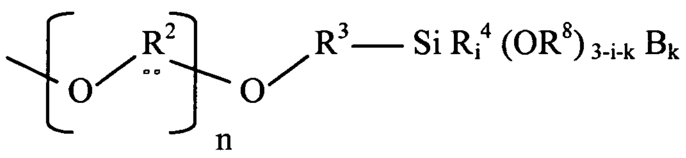

Formule IV

dans laquelle,
$R^2$ représente un radical alkylène en $C_1$-$C_{10}$,
$R^3$ représente un dérivé hydrocarboné alkyl en $C_1$ - $C_{50}$, aryle en $C_6$ - $C_{50}$ ou aralkyle en $C_7$ - $C_{50}$ divalent,
$R^4$ représente, indépendamment l'un de l'autre, un radical alkyle en $C_1$ - $C_{50}$, aryle en $C_6$ - $C_{50}$ ou aralkyle en $C_7$ - $C_{50}$,
$R^8$ représente un atome d'hydrogène ou un radical alkyle en $C_1$ - $C_{18}$, cycloalkyle en $C_5$-$C_{18}$ ou aryle en $C_6$ - $C_{18}$,
n est un nombre supérieur à 1, de manière à ce que le bloc polyéther ait une masse moléculaire moyenne en nombre de 150 à 5000 g/mol,
i est un nombre entier de 0 à 2,
k est un nombre entier de 1 à 3, de sorte que $i + k \leq 3$, et
B représente le groupement - $[(- O - Si\ R^9\ R^{10})_q - P]$, dans lequel $R^9$ et $R^{10}$ représentent, indépendamment l'un de l'autre, un radical alkyl $C_1$ - $C_{50}$, aryle en $C_6$ - $C_{50}$ ou aralkyle en $C_7$ - $C_{50}$, q est un nombre entier de 0 à 10 et P est un élastomère diénique.

**9.** Copolymère diénique à blocs selon la revendication 8, **caractérisé en ce que** dans les formules générales III et IV, $R^2$ et $R^3$ sont, indépendamment l'un de l'autre, tels que définis dans les revendications 2 et 3.

**10.** Copolymère diénique à blocs selon la revendication 8 ou 9, **caractérisé en ce que** dans les formules générales III et IV, m vaut 1 et k vaut 2.

**11.** Copolymère diénique à blocs selon la revendication 8 ou 9, **caractérisé en ce que** dans les formules générales III et IV, m vaut 2 et k vaut 1.

**12.** Copolymère diénique à blocs selon l'une quelconque des revendications 8 à 11 **caractérisé en ce que** dans la formule générale IV, i + k vaut 1 ou 2.

**13.** Copolymère diénique à blocs selon l'une quelconque des revendications 8 à 12, **caractérisé en ce que** dans la formule générale IV, q est non nul, de préférence égal à 1.

**14.** Composition de caoutchouc renforcée, utilisable pour la fabrication d'une enveloppe de pneumatique, à base d'au moins un copolymère diénique à blocs tel que défini dans les revendications 8 à 13 destiné à interagir avec une charge renforçante

**15.** Composition de caoutchouc selon la revendication 14, **caractérisée en ce qu'**elle comprend majoritairement une charge inorganique renforçante à titre de charge renforçante.

**16.** Pneumatique, **caractérisée en ce qu'**elle incorpore dans au moins un de ses éléments constitutifs une composition de caoutchouc selon la revendication 14 ou 15.

**17.** Bande de roulement pour pneumatique selon la revendication 16, **caractérisée en ce qu'**elle comprend une composition de caoutchouc selon la revendication 14 ou 15.

**Patentansprüche**

**1.** Verfahren zur Herstellung eines Dienblockcopolymers, wobei mindestens einer der Blöcke aus einem Dienelastomer besteht und mindestens der andere der Blöcke aus einem Polyether besteht, **dadurch gekennzeichnet, dass** es einen Schritt der Umsetzung eines lebenden Dienelastomers mit einem Funktionalisierungsmittel der allgemeinen Formel I mit einem funktionellen Polyetherblock mit einem zahlenmittleren Molekulargewicht von ungefähr 150 bis

5000 g/mol umfasst,

$R^1(A)_m$ Formel I

worin

$R^1$ für ein $C_1$-$C_{15}$-Alkyl-, $C_6$-$C_{15}$-Aryl- oder $C_7$-$C_{15}$-Alkylarylkohlenwasserstoffderivat mit der Wertigkeit m steht,
m für eine ganze Zahl von 1 bis 4 steht.
A im Fall von m größer 1 gleich oder verschieden ist und für den Block der allgemeinen Formel II

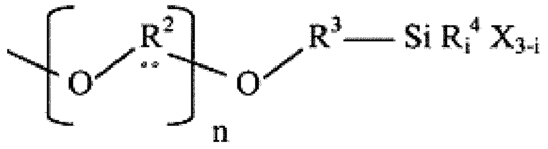

Formel I

steht, worin
$R^2$ für einen $C_1$-$C_{10}$-Alkylenrest steht,
$R^3$ für ein zweiwertiges $C_1$-$C_{50}$-Alkyl-, $C_6$-$C_{50}$-Aryl- oder $C_7$-$C_{50}$-Aralkylkohlenwasserstoffderivat steht,
$R^4$ für einen $C_1$-$C_{50}$-Alkyl-, $C_6$-$C_{50}$-Aryl- oder $C_7$-$C_{50}$-Aralkylrest steht,
X im Fall von i gleich 0 oder 1 gleich oder verschieden ist und für eine Gruppe, die aus einem Halogenatom und einer Gruppe der Formel $-OR^5$ ausgewählt ist, steht, wobei $R^5$ für einen $C_1$-$C_{18}$-Alkyl-, $C_5$-$C_{18}$-Cycloalkoxyl- oder $C_6$-$C_{18}$-Arylrest steht,
n für eine solche ganze Zahl größer 1 steht, dass der Polyetherblock ein zahlenmittleres Molekulargewicht von 150 bis 5000 g/mol aufweist,
i für eine ganze Zahl von 0 bis 2 steht.

2. Verfahren nach Anspruch 1, **dadurch gekennzeichnet, dass** in der allgemeinen Formel I $R^2$ für den Ethylenrest steht.

3. Verfahren nach Anspruch 1 oder 2, **dadurch gekennzeichnet, dass** in der allgemeinen Formel I $R^3$ für den Propan-1,3-diylrest steht.

4. Verfahren nach einem der vorhergehenden Ansprüche, **dadurch gekennzeichnet, dass** das Verfahren vor dem Schritt der Umsetzung des lebenden Dienelastomers mit einem Funktionalisierungsmittel der allgemeinen Formel I einen Schritt der Herstellung des lebenden Dienelastomers durch anionische Polymerisation mindestens eines Dienmonomers in Gegenwart eines monofunktionellen metallorganischen Initiators umfasst.

5. Verfahren nach einem der vorhergehenden Ansprüche, **dadurch gekennzeichnet, dass** das Verfahren vor dem Schritt der Umsetzung des lebenden Dienelastomers mit einem Funktionalisierungsmittel der allgemeinen Formel I einen Schritt der intermediären Funktionalisierung des lebenden Polymers durch Umsetzung des lebenden Polymers mit einer cyclischen Organosiloxanverbindung zur Bildung eines Silanolat-terminierten lebenden Dienelastomers umfasst und das vorfunktionalisierte Elastomer dann mit dem Funktionalisierungsmittel der allgemeinen Formel I umgesetzt wird.

6. Verfahren nach einem der vorhergehenden Ansprüche, **dadurch gekennzeichnet, dass** auf den Schritt der Umsetzung des lebenden Dienelastomers mit dem Funktionalisierungsmittel der allgemeinen Formel I ein Hydrolyse- oder Alkoholyseschritt folgt.

7. Verfahren nach einem der vorhergehenden Ansprüche, **dadurch gekennzeichnet, dass** das Verfahren einen Schritt der Kupplung und/oder der Sternverzweigung und/oder auch der zusätzlichen Funktionalisierung mit einem anderen Funktionalisierungsmittel, das keine cyclische Organosiloxanverbindung ist und von demjenigen der allgemeinen Formel I verschieden ist, umfasst.

8. Dienblockcopolymer, **dadurch gekennzeichnet, dass** es mindestens einen Polyetherblock umfasst, der ein zahlenmittleres Molekulargewicht von ungefähr 100 bis 5000 g/mol aufweist und der folgenden allgemeinen Formel III

entspricht:

$R^1(A')_m$ Formel III

worin

$R^1$ für ein $C_1$-$C_{15}$-Alkyl-, $C_6$-$C_{15}$-Aryl- oder $C_7$-$C_{15}$-Alkylarylkohlenwasserstoffderivat mit der Wertigkeit m steht, m für eine ganze Zahl von 1 bis 4 steht.
A' im Fall von m größer 1 gleich oder verschieden ist und für den Block der allgemeinen Formel IV

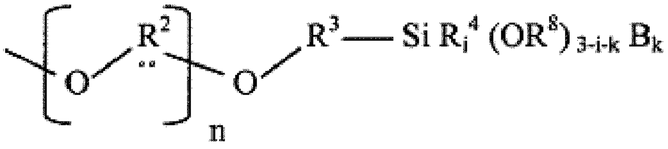

Formel IV

steht, worin
$R^2$ für einen $C_1$-$C_10$-Alkylenrest steht,
$R^3$ für ein zweiwertiges $C_1$-$C_{50}$-Alkyl-, $C_6$-$C_{50}$-Aryl- oder $C_7$-$C_{50}$-Aralkylkohlenwasserstoffderivat steht, $R^4$ für einen $C_1$-$C_{50}$-Alkyl-, $C_6$-$C_{50}$-Aryl- oder $C_7$-$C_{50}$-Aralkylrest steht,
$R^8$ für ein Wasserstoffatom oder einen $C_1$-$C_{18}$-Alkyl-, $C_5$-$C_{18}$-Cycloalkyl- oder $C_6$-$C_{18}$-Arylrest steht,
n für eine solche ganze Zahl größer 1 steht, dass der Polyetherblock ein zahlenmittleres Molekulargewicht von 150 bis 5000 g/mol aufweist,
i für eine ganze Zahl von 0 bis 2 steht,
k für eine solche ganze Zahl von 1 bis 3 steht, dass $i + k \leq 3$ ist, und
B für die Gruppierung $-[(-O-SiR^9R^{10})_q-P]$ steht, worin $R^9$ und $R^{10}$ unabhängig voneinander für einen $C_1$-$C_{50}$-Alkyl-, $C_6$-$C_{50}$-Aryl- oder $C_7$-$C_{50}$-Aralkylrest stehen, q für eine ganze Zahl von 0 bis 10 steht und P für ein Dienelastomer steht.

**9.** Dienblockcopolymer nach Anspruch 8, **dadurch gekennzeichnet, dass** in den allgemeinen Formeln III und IV $R^2$ und $R^3$ unabhängig voneinander wie in den Ansprüchen 2 und 3 definiert sind.

**10.** Dienblockcopolymer nach Anspruch 8 oder 9, **dadurch gekennzeichnet, dass** in den allgemeinen Formeln III und IV m gleich 1 ist und k gleich 2 ist.

**11.** Dienblockcopolymer nach Anspruch 8 oder 9, **dadurch gekennzeichnet, dass** in den allgemeinen Formeln III und IV m gleich 2 ist und k gleich 1 ist.

**12.** Dienblockcopolymer nach einem der Ansprüche 8 bis 11, **dadurch gekennzeichnet, dass** in der allgemeinen Formel IV i + k gleich 1 oder 2 ist.

**13.** Dienblockcopolymer nach einem der Ansprüche 8 bis 12, **dadurch gekennzeichnet, dass** in der allgemeinen Formel IV q nicht null und vorzugsweise gleich 1 ist.

**14.** Verstärkte Kautschukzusammensetzung, die zur Herstellung eines Reifenmantels geeignet ist, auf Basis von mindestens einem zur Wechselwirkung mit einem verstärkenden Füllstoff vorgesehenen Dienblockcopolymer gemäß einem der Ansprüche 8 bis 13.

**15.** Kautschukzusammensetzung nach Anspruch 14, **dadurch gekennzeichnet, dass** sie als verstärkenden Füllstoff hauptsächlich einen verstärkenden anorganischen Füllstoff umfasst.

**16.** Reifen, **dadurch gekennzeichnet, dass** er in mindestens einem seiner Aufbauelemente eine Kautschukzusammensetzung nach Anspruch 14 oder 15 enthält.

**17.** Lauffläche für einen Reifen nach Anspruch 16, **dadurch gekennzeichnet, dass** sie eine Kautschukzusammensetzung nach Anspruch 14 oder 15 umfasst.

**Claims**

1. Process for preparing a diene block copolymer, of which at least one of said blocks is constituted of a diene elastomer and at least the other of said blocks is constituted of a polyether, **characterized in that** it comprises a step of reacting a living diene elastomer with a functionalizing agent having a functional polyether block of number-average molecular weight from 150 to 5000 g/mol, represented by the general formula I:

$$R^1(A)_m \qquad \text{Formula I}$$

in which:

$R^1$ represents a $C_1$ - $C_{15}$ alkyl, $C_6$ - $C_{15}$ aryl or $C_7$-$C_{15}$ aralkyl hydrocarbon-based derivative of valency m;
m is an integer from 1 to 4; and
A represents, identically or differently when m is greater than 1, the group of general formula II

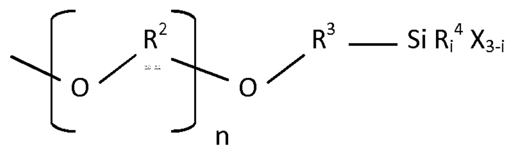

Formula II

in which:
$R^2$ represents a $C_1$-$C_{10}$ alkylene radical;
$R^3$ represents a divalent $C_1$ - $C_{50}$ alkyl, $C_6$ - $C_{50}$ aryl or $C_7$ - $C_{50}$ aralkyl hydrocarbon-based derivative;
$R^4$ represents a $C_1$ - $C_{50}$ alkyl, $C_6$ - $C_{50}$ aryl or $C_7$ - $C_{50}$ aralkyl radical;
X represents, identically or differently when i is equal to 0 or 1, a group chosen from a halogen atom and a group of formula $-OR^5$ in which $R^5$ represents a $C_1$ - $C_{18}$ alkyl, $C_5$-$C_{18}$ cycloalkoxyl or $C_6$ - $C_{18}$ aryl radical;
n is a number greater than 1, so that the polyether block has a number-average molecular weight from 150 to 5000 g/mol; and
i is an integer from 0 to 2.

2. Process according to Claim 1, **characterized in that** in the general formula I, $R^2$ represents the ethylene radical.

3. Process according to Claim 1 or 2, **characterized in that** in the general formula I, $R^3$ represents the propane-1,3-diyl radical.

4. Process according to any one of the preceding claims, **characterized in that** prior to the step of reacting the living diene elastomer with the functionalizing agent of general formula I, the process comprises a step of preparing the living diene elastomer by anionic polymerization of at least one diene monomer in the presence of a monofunctional organometallic initiator.

5. Process according to any one of the preceding claims, **characterized in that** prior to the step of reacting the living diene elastomer with the functionalizing agent of general formula I, the process comprises a step of intermediate functionalization of the living polymer by reaction of the latter with a cyclic organosiloxane compound to form a silanolate-terminated living diene elastomer, and **in that** the prefunctionalized elastomer then reacts with the functionalizing agent of general formula I.

6. Process according to any one of the preceding claims, **characterized in that** the step of reacting the living diene elastomer with the functionalizing agent of general formula I is followed by a hydrolysis or alcoholysis step.

7. Process according to any one of the preceding claims, **characterized in that** the process comprises a step of coupling and/or of star-branching and/or else of supplementary functionalization with a functionalizing agent other than a cyclic organosiloxane compound and different from that of general formula I.

8. Diene block copolymer, **characterized in that** it comprises at least one polyether block of number-average molecular weight from 150 to 5000 g/mol, and corresponds to the general formula III:

$R^1(A')_m$ Formula III

in which:

$R^1$ represents a $C_1$ - $C_{15}$ alkyl, $C_6$ - $C_{15}$ aryl or $C_7$-$C_{15}$ alkylaryl hydrocarbon-based derivative of valency m;
m is an integer from 1 to 4; and
A' represents, identically or differently when m is other than 1, the block of general formula IV:

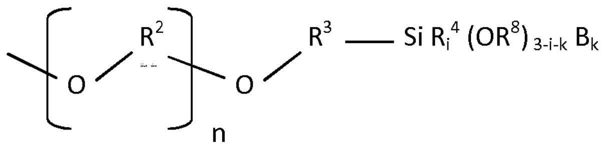

Formula IV

in which:
$R^2$ represents a $C_1$-$C_{10}$ alkylene radical;
$R^3$ represents a divalent $C_1$ - $C_{50}$ alkyl, $C_6$ - $C_{50}$ aryl or $C_7$ - $C_{50}$ aralkyl hydrocarbon-based derivative;
$R^4$ represents, independently of one another, a $C_1$ - $C_{50}$ alkyl, $C_6$ - $C_{50}$ aryl or $C_7$ - $C_{50}$ aralkyl radical;
$R^8$ represents a hydrogen atom or a $C_1$ - $C_{18}$ alkyl, $C_5$-$C_{18}$ cycloalkyl or $C_6$ - $C_{18}$ aryl radical;
n is a number greater than 1, so that the polyether block has a number-average molecular weight of 150 to 5000 g/mol;
i is an integer from 0 to 2;
k is an integer from 1 to 3, such that $i + k \leq 3$; and
B represents the - [(- O - Si $R^9$ $R^{10}$)q- P] group, in which $R^9$ and $R^{10}$ represent, independently of one another, a $C_1$ - $C_{50}$ alkyl, $C_6$ - $C_{50}$ aryl or $C_7$ - $C_{50}$ aralkyl radical, q is an integer from 0 to 10, and P is a diene elastomer.

9. Diene block copolymer according to Claim 8, **characterized in that** in the general formulae III and IV, $R^2$, $R^3$, are, independently of one another, as defined in Claims 2 and 3.

10. Diene block copolymer according to Claim 8 or 9, **characterized in that** in the general formulae III and IV, m is equal to 1 and k is equal to 2.

11. Diene block copolymer according to Claim 8 or 9, **characterized in that** in the general formulae III and IV, m is equal to 2 and k is equal to 1.

12. Diene block copolymer according to any one of Claims 8 to 11, **characterized in that** in the general formula IV, i + k is equal to 1 or 2.

13. Diene block copolymer according to any one of Claims 8 to 12, **characterized in that** in the general formula IV, q is not zero, preferably equal to 1.

14. Reinforced rubber composition, that can be used for the manufacture of a pneumatic tyre, based on at least one diene block copolymer as defined in Claims 8 to 13, which is intended to interact with a reinforcing filler.

15. Rubber composition according to Claim 14, **characterized in that** it comprises predominantly a reinforcing inorganic filler as a reinforcing filler.

16. Tyre, **characterized in that** it incorporates, in at least one of its constituent components, a rubber composition according to Claim 14 or 15.

17. Tread for a tyre according to Claim 16, **characterized in that** it comprises a rubber composition according to one of Claims 14 or 15.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5066721 A
- EP 0778311 B1
- EP 1127909 B1
- US 6518369 B
- EP 0455137 A2
- FR 2366340
- FR 2366341
- FR 2250774
- WO 03016387 A
- EP 735088 A
- EP 810258 A
- WO 9928376 A
- WO 2006069792 A
- WO 2006069793 A
- WO 9637547 A
- WO 03002648 A
- US 20050016651 A
- WO 03002649 A
- US 20050016650 A
- WO 02083782 A
- US 20040132880 A
- WO 0230939 A
- US 6774255 B
- WO 02310415 A
- US 2004051210 A
- WO 2006125532 A
- WO 2006125533 A
- WO 2006125534 A
- WO 0210269 A


### Littérature non-brevet citée dans la description


- **BRUNAUER-EMMET-TELLER.** *The Journal of the American Chemical Society,* Février 1938, vol. 60, 309
- **VILMIN, F. ; DUSSAP, C. ; COSTE, N.** *Applied Spectroscopy,* 2006, vol. 60, 619-29